# EUROPÄISCHE PATENTSCHRIFT

(11) **EP 2 917 776 B1**
(45) Veröffentlichungstag und Bekanntmachung des Hinweises auf die Patenterteilung: **20.03.2019**
(21) Anmeldenummer: 13799200.4
(22) Anmeldetag: 06.11.2013
(51) Int. Cl.: G02B 21/00, G02B 27/58

(54) **LICHTMIKROSKOP UND MIKROSKOPIEVERFAHREN**
OPTICAL MICROSCOPE AND MICROSCOPY METHOD
MICROSCOPE OPTIQUE ET PROCÉDÉ DE MICROSCOPIE

(30) Priorität: 07.11.2012 DE 102012022430; 23.11.2012 DE 102012023024
(43) Veröffentlichungstag der Anmeldung: 16.09.2015
(73) Patentinhaber: Carl Zeiss Microscopy GmbH, 07745 Jena (DE)
(72) Erfinder: KLEPPE, Ingo, 07749 Jena (DE); NIETEN, Christoph, 07745 Jena (DE); NOVIKAU, Yauheni, 07743 Jena (DE); NETZ, Ralf, 07745 Jena (DE)
(74) Vertreter: Ridderbusch, Oliver
(86) Internationale Anmeldenummer: PCT/EP2013/003338
(87) Internationale Veröffentlichungsnummer: WO 2014/072049

(56) Entgegenhaltungen:
- EP-A1- 2 317 362
- DE-A1- 10 344 410
- US-A1- 2006 086 887

## Beschreibung

Die vorliegende Erfindung betrifft ein Lichtmikroskop nach dem Oberbegriff des Anspruchs 1. Zudem ist die Erfindung auf ein Mikroskopieverfahren gemäß dem Oberbegriff des Anspruchs 13 gerichtet, welches auch als Verfahren zur Bildaufnahme in einem Lichtmikroskop bezeichnet werden kann.

Zweck eines gattungsgemäßen Lichtmikroskops ist die Aufnahme von Bildern einer Probe, die sich in der Probenebene befindet und mit Licht von mindestens einer Lichtquelle beleuchtet wird. Das von der Probe kommende Licht wird mit einer Detektionseinrichtung zur Erzeugung des Probenbildes aufgezeichnet.

Hierzu weist ein gattungsgemäßes Lichtmikroskop eine Probenebene auf, in welcher eine zu untersuchende Probe positionierbar ist, eine Lichtquelle zum Aussenden von Beleuchtungslicht, optische Abbildungsmittel zum Leiten des Beleuchtungslichts in die Probenebene, eine erste Scan-Einrichtung, mit welcher ein Strahlengang des Beleuchtungslichts und die Probe relativ zueinander bewegbar sind zum Erzeugen einer Beleuchtungsabtastbewegung des Beleuchtungslichts relativ zur Probe, eine Detektoreinrichtung zum Nachweisen von Probenlicht, welches von der Probe kommt, und Elektronikmittel zum Erzeugen eines Bilds der Probe auf Grundlage des von der Detektoreinrichtung nachgewiesenen Probenlichts zu verschiedenen Probenbereichen. Zweckmäßigerweise können Optikmittel zum Abbilden verschiedener Probenbereiche auf unterschiedliche Detektorbereiche der Detektoreinrichtung vorhanden sein.

Bei einem gattungsgemäßen Mikroskopieverfahren zum Untersuchen einer Probe, die in einer Probenebene eines Mikroskops positioniert wird, ist vorgesehen, dass Beleuchtungslicht in die Probenebene geleitet wird, dass ein Strahlengang des Beleuchtungslichts und die Probe relativ zueinander bewegt werden zum Erzeugen einer Beleuchtungsabtastbewegung des Beleuchtungslichts relativ zur Probe und dass von der Probe kommendes Probenlicht mit einer Detektoreinrichtung nachgewiesen wird. Dabei können verschiedene Probenbereiche auf unterschiedliche Detektorbereiche der Detektoreinrichtung abgebildet werden. Mit Elektronikmitteln wird schließlich ein Bild der Probe auf Grundlage des nachgewiesenen Probenlichts erzeugt.

Bei solchen Lichtmikroskopen und Mikroskopieverfahren ist es ein grundlegendes Ziel, ein Probenbild mit möglichst hoher Auflösung und gutem Signal-zu-Rausch-Verhältnis zu erzeugen.

EP 2 317 362 A1 beschreibt ein Laser-Scanning-Mikroskop, mit dem eine möglichst hohe Auflösung erreicht werden soll. Hierzu umfasst das Mikroskop einen langsamen Scanner und einen schnellen Scanner, mit denen eine Probe abgetastet wird. Bei jedem Schritt des langsamen Scanners erfolgt eine Abrasterung der Probe durch den schnellen Scanner. Der langsame Scanner betrifft allein Beleuchtungslicht, während der schnelle Scanner sowohl Beleuchtungs- als auch Detektionslicht ablenkt. DE 103 44 410 A1 beschreibt ein Rastermikroskop mit evaneszenter Beleuchtung. Im Detektionsstrahlengang befindet sich eine Strahlablenkeinrichtung, welche nacheinander Probenlicht aus verschiedenen Probenbereichen auf einen Lichtdetektor leitet. Im Beleuchtungsstrahlengang kann eine weitere Strahlablenkeinrichtung vorhanden sein, welche das Beleuchtungslicht kreisend durch den Außenbereich einer Objektivpupille bewegt, um eine sehr homogene und gleichmäßige Beleuchtung zu erreichen. US 2006/0086887 A1 betrifft ein Laser-Scanning-Mikroskop mit zwei optischen Systemen. Jedes optische System umfasst ein oder mehrere Beleuchtungslichtquellen sowie mehrere Detektoren. Außerdem umfasst jedes optische System eine Scaneinrichtung, welche sowohl das Beleuchtungslicht als auch das Detektionslicht dieses optischen Systems gleichermaßen ablenkt.

Zur Untersuchung einer Probe mit erhöhter Auflösung ist die Mikroskopie mit strukturierter Beleuchtung (SIM) etabliert. Das Beleuchtungslicht wird dabei als strukturiertes Beleuchtungslicht in die Probenebene geführt. Allgemein kann aber auch ein Beleuchtungsspot oder ein beliebig geformtes Beleuchtungsmuster in der Probenebene erzeugt werden. Unter strukturiertem Beleuchtungslicht kann beliebiges Licht mit einer räumlich variablen Intensitätsverteilung über den Strahlquerschnitt verstanden werden. Dazu zählt Licht mit einer periodischen Intensitätsverteilung über den Querschnitt, z.B. ein eindimensionales Linienmuster mit beleuchteten und nicht beleuchteten Linien.

Ist ein Lichtmikroskop der oben genannten Art als Laser-Scanning-Mikroskop gebildet, wird als Beleuchtungsmuster ein Beleuchtungsspot oder -fleck erzeugt. Dieser kann nahezu beugungsbegrenzt sein und kann in der vorliegenden Offenbarung auch als eine Form von strukturiertem Beleuchtungslicht angesehen werden.

Zur Erzeugung von strukturiertem Beleuchtungslicht werden üblicherweise in den optischen Strahlengang des Lichtmikrokops zwischen Probe und Lichtquelle Optikbaugruppen eingeführt, die strukturiertes Beleuchtungslicht bereitstellen. Im Allgemeinen werden mehrere Optikbaugruppen verwendet, um die notwendige Flexibilität im strukturierten Beleuchtungslicht zu erlangen.

Bei den optischen Baugruppen handelt es sich häufig um Gitter. Dabei kommen Gitter mit verschiedener Gitterausrichtung und Periode während einer im Allgemeinen sequentiellen Probenbildaufnahme zur Anwendung. In einer anschließenden Verrechnung der Bilddaten entsteht ein Bild der Probe mit erhöhter Auflösung. Mit erhöhter Auflösung ist ein Vergleich zur Weitfeldauflösung gemeint.

Die erhöhte Auflösung, die mit dieser Methode erreicht werden kann, stellt einen erheblichen Vorteil gegenüber der herkömmlichen Aufnahme von Weitfeldbildern, aber auch gegenüber Laser-Scanning-Mikroskop-Bildern, dar.

Die zuvor aufgeführte Variante der strukturierten Beleuchtung in Form eines Beleuchtungsspots wird bei einem Laser-Scanning-Mikroskop genutzt. In dieser Form von Lichtmikroskop wird die erhöhte Auflösung dadurch erreicht, dass ein sogenanntes Pinhole, das heißt eine Lochblende, vor dem Detektor positioniert ist. Das Pinhole weist eine Größe deutlich kleiner als die Beugungsgrenze auf, beispielsweise kleiner oder gleich Airy / 4. Man spricht dann von einem konfokalen Laser-Scanning-Mikroskop (LSM). Beim LSM ist durch die Pinhole-Raumfilterung eine gute Konfokalität gegeben.

Das Airy wird über die ersten Nullstellen eines beugungsbegrenzten Beleuchtungsspots definiert und ist ein etablierter Begriff in der Optikliteratur. Ein Airy ist somit eine Ausdehnung eines Beugungsscheibchens in einer Bildebene, wobei das Beugungsscheibchen durch einen Punkt in der Probenebene hervorgerufen wird. Die Ausdehnung kann als Strecke zwischen den ersten Nullstellen des Beugungsscheibchens definiert sein.

Einen entscheidenden Nachteil eines Laser-Scanning-Mikroskops bei der gegenwärtigen Methode zur Erlangung erhöhter Auflösung stellt das schlechte Signal-zu-Rausch-Verhältnis dar. Dieses resultiert aus der geringen Anzahl detektierter Photonen, die von der Probe kommen. In der Praxis führt dies dazu, dass keine verbesserte Auflösung erreicht werden kann.

Ein Verfahren zur Steigerung der Auflösung bei einem Laser-Scanning-Mikroskop geht auf den Artikel "Super-resolution in Confocal Imaging" von Colin Sheppard et al. zurück, erschienen in Optik 80, No. 2, 53 (1988). Hierbei wird die Auflösung eines Laser-Scanning-Mikroskops bei gleichzeitig besserem Signal-zu-Rausch-Verhältnis erhöht. Dazu wird ein größerer Pinhole-Durchmesser von ca. 1 Airy eingesetzt. Dies führt zu einer höheren Anzahl detektierbarer Photonen. Zudem wird mit einer Sub-Airy-ortsaufgelösten Detektion gearbeitet. Nach der Bildaufnahme erfolgt eine Umsortierung und Verrechnung der Daten mittels eines speziellen Algorithmus. Dies führt zu einer erhöhten Auflösung im Probenbild.

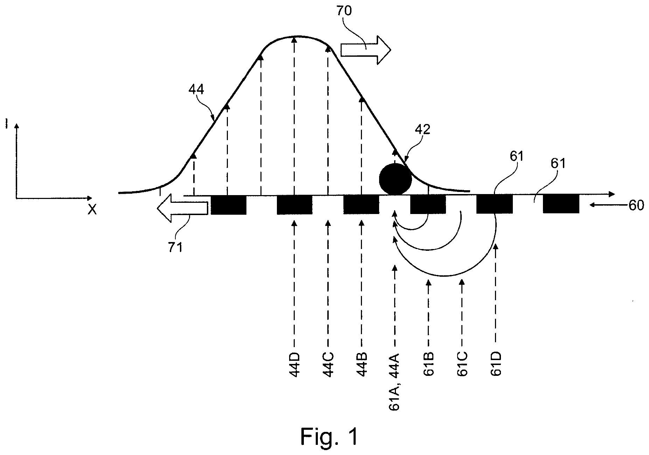

Eine nähere Erläuterung dieses Verfahrens erfolgt mit Bezug auf Fig. 1. Diese zeigt schematisch eine Probe entlang der x-Achse einer Probenebene. Die Probe umfasst ein fluoreszierendes Objekt 42. Zudem ist ein Beleuchtungsspot 44 dargestellt. Auf der Ordinate ist eine Intensität I des Beleuchtungsspots 44 angegeben. Die Abmessungen des Beleuchtungsspots 44 können beugungsbegrenzt sein und sind in der x-Richtung größer als das Objekt 42. Trifft der Beleuchtungsspot 44 das Objekt 42, wird dieses zur Fluoreszenz angeregt und strahlt Probenlicht aus, welches von einer Detektoreinrichtung nachgewiesen werden kann.

In Fig. 1 ist weiterhin eine Abbildung einer solchen Detektoreinrichtung 60 in die Probenebene dargestellt. Die Detektoreinrichtung 60 umfasst mehrere Detektorelemente 61. Wird die Probenebene vollständig ausgeleuchtet, wird Probenlicht vom Objekt 42 demnach hauptsächlich vom Detektorelement 61A gemessen.

Die Detektorelemente 61 empfangen jedoch nicht nur Probenlicht, das von einem Punkt der Probenebene ausgeht. Vielmehr wird auf jedes Detektorelement ein ausgedehnter Empfangsbereich abgebildet, welcher durch die PSF (Point Spread Function, Punktspreizfunktion) der Abbildung bestimmt ist. Die PSF für ein Detektorelement 61 kann beispielsweise die Form des eingezeichneten Beleuchtungsspots 44 aufweisen und ist um das entsprechende Detektorelement 61 zentriert. Die Abmessungen des Beleuchtungsspots 44 können ebenfalls durch eine PSF einer Punktlichtquelle bestimmt sein.

Die gemessene Lichtintensität eines bestimmten Detektorelements wird nun durch eine Gesamt-PSF bestimmt, welche das Produkt der PSF zum Beleuchtungsspot 44 und der PSF zum Detektorelement ist. Das Maximum der Gesamt-PSF kann in etwa mittig zwischen dem Beleuchtungsspot 44 und dem jeweiligen Detektorelement liegen. Im dargestellten Beispiel ist der Beleuchtungsspot 44 um eine Position 44D zentriert. Das Detektorelement 61D empfängt in diesem Fall Licht hauptsächlich von einem Ort, der mittig zwischen 44D und 61D liegt. Dies ist die Position 61A, an welcher sich das Objekt 42 befindet. Hingegen misst das Detektorelement 61D von der Position 61D kaum Licht.

Zur Abtastung der Probe wird nun der Beleuchtungsspot von 44D auf beispielweise die Position 44B verschoben. Das Detektorelement 61D misst sodann nicht mehr Licht von hauptsächlich der Position 61A, sondern 61B.

Dieser Umstand kann zur Auflösungssteigerung genutzt werden. Dazu werden die Detektorelemente 61 zu jeder Position des Beleuchtungsspots 44 ausgelesen. Die dabei gemessenen Probenlichtsignale werden abhängig von der Position des Beleuchtungsspots 44 verschiedenen Probenbereichen zugeordnet. Das heißt, die von ein und demselben Detektorelement gemessenen Probenlichtsignale werden abhängig von der Position des Beleuchtungsspots 44 umsortiert.

Das Umsortieren ist durch die gebogenen Pfeile veranschaulicht. Demnach wird ein Signal des Detektorelementes 61D dem Ort des Objekts 42 zugeordnet, wenn sich ein Beleuchtungsspot an der Stelle 44D befindet. Analog werden ein Signal des Detektorelementes 61C bei einem Beleuchtungsspot an der Stelle 44C und ein Signal des Detektorelementes 61B bei einem Beleuchtungsspot an der Stelle 44B dem Ort des Objekts 42 zugeordnet.

In dieser Weise kann zwar eine Auflösungsverbesserung erreicht werden. Der apparative Aufwand zum Erreichen dieses Umsortierens ist jedoch hoch. Zudem ist ein Zeitbedarf zum Berechnen des Umsortierens verhältnismäßig groß.

Der Zeitaufwand ist insbesondere hoch, wenn empfindliche Weitfelddetektoren, wie zum Beispiel CCD-Chips, zur Anwendung kommen. Deren vergleichsweise niedrige Auslesegeschwindigkeit vergrößert die erforderliche Zeit zum Untersuchen der Probe.

Als **Aufgabe** der Erfindung kann angesehen werden, ein Lichtmikroskop und ein Mikroskopieverfahren bereitzustellen, bei denen eine möglichst hohe Messauflösung bei kurzen Messzeiten in kostengünstiger Weise ermöglicht wird.

Die Aufgabe wird durch ein Lichtmikroskop mit den Merkmalen des Anspruchs 1 und ein Mikroskopieverfahren mit den Merkmalen des Anspruchs 13 gelöst.

Bevorzugte Ausführungsvarianten des erfindungsgemäßen Verfahrens und des erfindungsgemäßen Lichtmikroskops sind Gegenstand der abhängigen Ansprüche und werden in der folgenden Beschreibung, insbesondere im Zusammenhang mit den Figuren, erläutert.

Das Lichtmikroskop der oben genannten Art ist erfindungsgemäß dadurch gekennzeichnet, dass eine zweite Scan-Einrichtung vorhanden ist, mit welcher verstellbar ist, welcher Probenbereich auf ein bestimmtes Detektorelement abbildbar ist, zum Erzeugen einer Detektionsabtastbewegung eines Empfangsbereichs eines Detektorelements in der Probenebene relativ zur Probe und dass die Elektronikmittel dazu eingerichtet sind, die erste und die zweite Scan-Einrichtung abhängig voneinander und so zu steuern, dass eine momentane Richtung der Detektionsabtastbewegung entgegengesetzt zu einer momentanen Richtung der Beleuchtungsabtastbewegung ist.

Das Mikroskopieverfahren der vorgenannten Art ist erfindungsgemäß dadurch gekennzeichnet, dass eine Detektionsabtastbewegung eines Empfangsbereichs eines Detektorelements in der Probenebene relativ zur Probe erzeugt wird, indem verstellt wird, welcher Probenbereich auf ein bestimmtes Detektorelement abgebildet wird, und dass die Beleuchtungsabtastbewegung und die Detektionsabtastbewegung abhängig voneinander und so gesteuert werden, dass eine momentane Richtung der Detektionsabtastbewegung und eine momentane Richtung der Beleuchtungsabtastbewegung entgegengesetzt zueinander sind. Bevorzugt wird das erfindungsgemäße Mikroskopieverfahren mit einem erfindungsgemäßen Mikroskop durchgeführt.

Als ein Grundgedanke der Erfindung kann angesehen werden, eine Probenabbildung auf der Detektoreinrichtung während der Beleuchtungsabtastbewegung nicht starr zu belassen. Vielmehr wird mit der zweiten Scan-Einrichtung eine Detektionsabtastbewegung durchgeführt, das heißt eine Relativbewegung zwischen der Detektoreinrichtung und der Abbildung eines Probenbereichs auf der Detektoreinrichtung. Für diese Relativbewegung kann prinzipiell eine Bewegung der Probe, der Detektoreinrichtung oder von Abbildungsmitteln erfolgen, welche die Abbildung der Probe auf der Detektoreinrichtung erzeugen.

Der Probenbereich, aus dem ein bestimmter Detektorbereich hauptsächlich Licht empfängt, hängt von der Position des Beleuchtungsmusters oder Beleuchtungsspots auf der Probe ab. Dies wurde mit Bezug auf Fig. 1 näher erläutert. Durch die Beleuchtungsabtastbewegung wird das Beleuchtungsmuster auf der Probe verschoben.

Dadurch verschiebt sich auch der Probenbereich, aus dem ein bestimmtes Detektorelement hauptsächlich Licht empfängt.

Als ein wesentlicher Vorteil kann durch die Detektionsabtastbewegung erreicht werden, dass ein bestimmtes Detektorelement Licht hauptsächlich aus stets demselben Probenbereich empfängt. Hierzu wird die Detektionsabtastbewegung gleichzeitig zur Beleuchtungsabtastbewegung durchgeführt.

Zudem ist die Richtung der Detektionsabtastbewegung bedeutsam. Allgemein wird zunächst das Beleuchtungsmuster auf einen ersten Probenbereich gestrahlt und auf ein bestimmtes Detektorelement wird ein dritter Probenbereich abgebildet. Dabei können der erste und dritte Probenbereich voneinander verschieden, überlappend oder identisch sein. Durch die Beleuchtungsabtastbewegung wird nun das Beleuchtungsmuster von dem ersten Probenbereich zu einem zweiten Probenbereich bewegt. Aufgrund der Detektionsabtastbewegung wird ein vierter Probenbereich auf das genannte Detektorelement abgebildet. Gemäß der Erfindung ist eine Richtung vom dritten zum vierten Probenbereich entgegengesetzt zu einer Richtung vom ersten zum zweiten Probenbereich.

Wie mit Bezug auf Fig. 1 erläutert, hängt die Lichtintensität, die von dem bestimmten Detektorelement empfangen wird, nicht allein von dessen Empfangsbereich ab, das heißt davon, welcher Probenbereich auf das Detektorelement abgebildet wird. Vielmehr hängt die Lichtintensität auch von der Position des Beleuchtungsmusters ab. Dabei ist die Gesamt-PSF, mit der ein Detektorelement Licht empfängt, von der PSF der Beleuchtung und der PSF zwischen Probenebene und Detektor abhängig. Durch die entgegengesetzte Richtung der Detektionsabtastbewegung kann erreicht werden, dass die Position der Gesamt-PSF für ein bestimmtes Detektorelement bezüglich der Probe ruht. Demnach empfängt das Detektorelement stets aus demselben Probenbereich Licht.

Als besonderer Vorteil ist es hierdurch nicht mehr erforderlich, Messsignale ein und desselben Detektorelements abhängig von der Position des Beleuchtungsmusters verschiedenen Probenbereichen zuzuordnen. Dadurch sinken die apparativen Erfordernisse und der Zeitbedarf zur Aufnahme eines Probenbilds.

Ein weiterer wesentlicher Vorteil der Erfindung ist, dass bereits ein einziges Rohbild eine erhöhte Auflösung mit gutem Signal-zu-Rausch-Verhältnis, mit reduziertem außerfokalem Probenlicht und ohne notwendige Verrechnung aufweist.

Die Lichtquelle kann prinzipiell beliebiger Art sein und umfasst bevorzugt einen oder mehrere Laser. Das Beleuchtungslicht kann beispielsweise als ein Beleuchtungsfleck in die Probenebene geführt werden. Andere Beleuchtungsmuster, wie beispielsweise ein Gittermuster oder ein Muster aus mehreren Beleuchtungsflecken, sind ebenfalls möglich. Durch das Beleuchtungslicht kann eine Probe Licht aussenden, welches als Probenlicht bezeichnet wird. Bei diesem kann es sich um zurückgeworfenes Beleuchtungslicht handeln oder auch um Lumineszenzlicht, also Fluoreszenz- oder Phosphoreszenzlicht. Das Probenlicht wird von der Detektoreinrichtung nachgewiesen, welche für eine räumliche Auflösung mehrere nebeneinander angeordnete Detektorelemente aufweist. Ein Detektorbereich kann als mehrere benachbarte Detektorelemente aufgefasst werden. Diese können durch einen oder mehrere Kamerachips gebildet sein. Aus den nachgewiesenen Lichtsignalen kann ein Probenbild mit Hilfe von Elektronikmitteln bestimmt werden, welche Teil einer Steuereinheit oder -einrichtung sein können.

Die Beleuchtungsabtastbewegung ist eine Relativbewegung zwischen dem Beleuchtungsmuster in der Probenebene und der Probe. Eine Richtungsangabe der Beleuchtungsabtastbewegung kann dadurch bestimmt sein, in welche Richtung sich das Beleuchtungsmuster auf der Probe bewegt. Dabei kann die Beleuchtungsabtastbewegung kontinuierlich oder diskontinuierlich erfolgen. Bei einer diskontinuierlichen Beleuchtungsabtastbewegung können beispielsweise nacheinander verschieden positionierte Gitter in die Probenebene abgebildet werden.

Die Detektionsabtastbewegung ist eine Relativbewegung zwischen dem Empfangsbereich eines bestimmten Detektorelements in der Probenebene und der Probe. Ein Empfangsbereich ist derjenige Bereich in der Probenebene, aus dem ein zugehöriges Detektorelement Licht empfängt. Der Empfangsbereich ist bestimmt durch die PSF der Abbildung zwischen Probenebene und Bildebene sowie durch die Abmessungen des zugehörigen Detektorelements. Ein Empfangsbereich kann auch als Abbildung des zugehörigen Detektorelements in die Probenebene aufgefasst werden. Eine Richtungsangabe der Detektionsabtastbewegung kann dadurch definiert sein, in welche Richtung sich der Empfangsbereich eines bestimmten Detektorelements relativ zur Probe bewegt.

Die Beleuchtungsabtastbewegung und die Detektionsabtastbewegung sind dann entgegengesetzt, wenn in der Probenebene die Empfangsbereiche der Detektorelemente entgegengesetzt zu dem Beleuchtungsmuster bewegt werden.

Bei kontinuierlichen Beleuchtungs- und Detektionsabtastbewegungen erfolgen diese gleichzeitig, um eine zueinander entgegengesetzte Bewegung zu erreichen. Die Beleuchtungsabtastbewegung kann aber auch diskontinuierlich erfolgen. Dabei wird ein Beleuchtungsmuster für eine vorgegebene Zeit in der Probenebene erzeugt. Direkt anschließend oder nach einer Beleuchtungsunterbrechungszeit wird ein anderes oder gleiches Beleuchtungsmuster an einer anderen Stelle in der Probenebene für eine vorgegebene Zeit erzeugt. In dieser Weise können alle Probenbereiche nacheinander abgetastet werden. Hierbei kann eine Detektionsabtastbewegung gleichzeitig mit einem örtlichen Umstellen des Beleuchtungsmusters erfolgen. Alternativ kann die Detektionsabtastbewegung aber auch nach einem Umstellen durch die erste Scan-Einrichtung erfolgen, solange die Detektionsabtastbewegung während der Beleuchtungsunterbrechungszeit durchgeführt wird.

Der Verlauf der Beleuchtungsabtastbewegung kann eine beliebige Form haben. Im Falle eines Beleuchtungsspots kann beispielsweise eine zick-zack-Bewegung erfolgen. Bei Linien als Beleuchtungsmuster, die beispielsweise durch Gitter erzeugbar sind, kann die Beleuchtungsabtastbewegung eine geradlinige Bewegung quer, insbesondere senkrecht, zur Linienrichtung sein. Die Detektionsabtastbewegung wird folglich entsprechend einer momentanen Richtung der Beleuchtungsabtastbewegung gewählt und kann ebenfalls eine zick-zack-Form oder einen geradlinigen Verlauf aufweisen.

Die Relativbewegung durch die erste Scan-Einrichtung kann prinzipiell durch Bewegen der Lichtquelle, durch Verändern des Strahlverlaufs des Beleuchtungslichts oder durch Verschieben der Probe erfolgen. Bevorzugt ist mit der ersten Scan-Einrichtung zum Erzeugen der Beleuchtungsabtastbewegung eine Strahlablenkung des Beleuchtungslichts einstellbar. Der Zeitbedarf hierfür ist vorteilhafterweise besonders gering. Eine Strahlablenkung erfolgt bevorzugt über einen Scanspiegel, der beispielsweise über ein Galvanometer oder ein mikroelektromechanisches System (MEMS) angetrieben wird. Alternativ sind auch piezoelektrische Aktuatoren zum Verstellen geeignet. Statt eines Scanspiegels kann auch die Neigung einer lichtdurchlässigen Platte oder die Position eines lichtbrechenden Keils geändert werden. Ferner können durch akustooptische Vorrichtungen in kurzer Zeit Strahlablenkungen variiert werden.

Bei einer bevorzugten Alternative ist mit der ersten Scan-Einrichtung zum Erzeugen der Beleuchtungsabtastbewegung eine Probenhalterung relativ zu einem Strahlengang des Beleuchtungslichts bewegbar. Vorteilhafterweise ist der konstruktive Aufwand zur Umsetzung gering und es ist kein Eingriff in den Strahlengang zwischen Lichtquelle und Probenebene erforderlich.

Die Detektionsabtastbewegung ist wiederum eine Relativbewegung, für welche die Probe relativ zum Detektor, der Detektor relativ zur Probe oder eine verstellbare Strahlablenkung des Probenlichts möglich ist.

Bevorzugt ist mit der zweiten Scan-Einrichtung eine Strahlablenkung des Probenlichts einstellbar zum Verschieben einer Abbildung eines Probenbereichs über die Detektoreinrichtung. Dabei kann die Strahlablenkung in einer der Weisen erfolgen, die zur Strahlablenkung des Beleuchtungslichts beschrieben wurden.

Alternativ kann die zweite Scan-Einrichtung zum Bewegen einer Probenhalterung und/oder der Detektoreinrichtung eingerichtet sein, um eine Abbildung eines bestimmten Probenbereichs über die Detektoreinrichtung zu verschieben. Bei einer Verschiebung der Detektoreinrichtung kann vorteilhafterweise der Strahlengang von der Lichtquelle zur Probenebene unbeeinflusst von einer solchen Verschiebung bleiben.

Besonders bevorzugt sind die erste und die zweite Scan-Einrichtung mit einer gemeinsamen Scan-Einrichtung gebildet. Die gemeinsame Scan-Einrichtung kann einen Scanspiegel aufweisen, wobei Beleuchtungslicht auf eine Vorderseite des Scanspiegels leitbar ist. Zum Erzeugen von entgegengesetzten Richtungen zwischen der Beleuchtungsabtastbewegung und der Detektionsabtastbewegung können Strahlführungsmittel vorhanden sein, mit welchen das Probenlicht auf eine Rückseite des Scanspiegels führbar ist. Bei einer Drehung des Scanspiegels ist die Änderung der Reflektionsrichtung für die Vorderseite entgegengesetzt zu der der Rückseite. Vorteilhafterweise sind hierdurch weniger kostenintensive Komponenten erforderlich. Zudem sind prinzipiell raumsparende Ausführungsformen möglich.

Bei der vorgenannten Variante ist eine verhältnismäßig einfache Strahlführung möglich, wenn das Probenlicht mit den Strahlführungsmitteln zunächst auf die Vorderseite des Scanspiegels und von dort auf die Rückseite des Scanspiegels leitbar ist. Zum Erzeugen von entgegengesetzten Richtungen zwischen der Beleuchtungsabtastbewegung und der Detektionsabtastbewegung ist von der Rückseite des Scanspiegels reflektiertes Probenlicht nochmals auf die Rückseite des Scanspiegels leitbar.

Prinzipiell können bereits Verbesserungen in der Bildqualität erreicht werden, sobald die Beleuchtungsabtastbewegung und die Detektionsabtastbewegung entgegengesetzt zueinander sind. Besonders gute Verbesserungen werden aber dadurch erzielt, dass die Elektronikmittel dazu eingerichtet sind, die Beleuchtungsabtastbewegung und die Detektionsabtastbewegung mit einer übereinstimmenden Schrittweite und/oder Geschwindigkeit durchzuführen. Diese sollen bei Betrachtung in der Probenebene übereinstimmen. Das heißt, die Bewegung des Beleuchtungsmusters in der Probenebene soll gleich groß oder schnell sein wie die Bewegung des Empfangsbereichs eines Detektorelements in der Probenebene. Bei einer diskontinuierlichen Beleuchtung bezeichnet die Schrittweite den Versatz zwischen zwei aufeinanderfolgenden Beleuchtungsmustern. Bei kontinuierlicher Beleuchtung ist eine Angabe der Beleuchtungsänderung als Geschwindigkeit zweckmäßig.

Wird für eine Detektionsabtastbewegung die Detektoreinrichtung bewegt, so in deren Geschwindigkeit oder Schrittweite um den Abbildungsmaßstab größer, mit dem ein Probenbereich auf die Detektoreinrichtung abbildbar ist.

Die Elektronikmittel können auch dazu eingerichtet sein, die Schrittweiten und/oder Geschwindigkeiten unterschiedlich voneinander und abhängig von der PSF zwischen Lichtquelle und Probenebene und von der PSF zwischen Probenebene und Detektoreinrichtung zu wählen.

Durch das erfindungsgemäße Lichtmikroskop und das erfindungsgemäße Mikroskopieverfahren kann eine besonders hohe Auflösung erreicht werden. Hierfür ist es besonders bevorzugt, dass benachbarte Detektorelemente zueinander einen Abstand aufweisen, der kleiner ist als eine Airy-Disk, den ein Punkt in der Probenebene auf der Detektoreinrichtung erzeugt. Die Airy-Disk kann dabei, wie zuvor erläutert, als Strecke zwischen den ersten Intensitätsminima der Abbildung eines Probenpunkts in der Bildebene definiert sein. So kommt der Auflösungsgewinn durch die Erfindung besonders zur Geltung, wenn in der Probenebene die Empfangsbereiche von mindestens vier Detektorelementen einander überlappen. In diesem Fall können die Detektorelemente auch als Sub-Airy-Detektorelemente bezeichnet werden.

Mit den Optikmitteln ist auf einer Detektionsfläche der Detektoreinrichtung ein Bild einer Probe erzeugbar, wobei die Abmessungen des Bildes durch den Abbildungsmaßstab der Optikmittel gegeben sind. Hierbei soll unter dem Bild einer Probe ein Bild des gesamten Bereichs in der Probenebene, der zu einem Zeitpunkt von den Optikmitteln abgebildet werden kann, verstanden werden. Ohne Detektorabtastbewegung wäre eine Detektionsfläche ausreichend, die gegenüber dem abbildbaren Bereich der Probenebene um den Abbildungsmaßstab zwischen Probenebene und Bildebene größer ist. Durch die Detektorabtastbewegung ist die erforderliche Detektionsfläche jedoch größer. Bevorzugt sind eine Länge und/oder eine Breite der Detektionsfläche mindestens doppelt so groß wie die Abmessungen des Bildes, das heißt mindestens doppelt so groß wie der zu untersuchende Probenbereich multipliziert mit dem Abbildungsmaßstab. Durch die doppelte Größe wird dem Umstand Rechnung getragen, dass die Schrittweiten und/oder Geschwindigkeiten der Proben- und Detektorabtastbewegung bevorzugt betragsgleich und entgegengerichtet sind.

Besondere Vorteile ergeben sich, wenn das Mikroskop ein Weitfeldmikroskop ist. Bei diesem kann insbesondere der gesamte zu untersuchende Probenbereich, der über die Beleuchtungsabtastbewegung stückweise beleuchtet wird, stets vollständig auf die Detektoreinrichtung abgebildet werden.

Alternativ kann in einem Detektionsstrahlengang, das heißt in einem Strahlengang zwischen der Probenebene und der Detektoreinrichtung, eine Blende zur konfokalen oder quasi-konfokalen Filterung vorhanden sein. Für eine quasi-konfokale Filterung kann die Blende eine Öffnung aufweisen, die zwischen einem und zwei Airy groß ist.

Bei einer bevorzugten Variante des erfindungsgemäßen Mikroskopieverfahrens werden Beleuchtungsabtastbewegungen und Detektionsabtastbewegungen während einer Integrationszeit von Detektorelementen der Detektoreinrichtung durchgeführt. Bei einem Positionswechsel des Beleuchtungsmusters und der Empfangsbereiche der Detektorelemente in der Probenebene erfolgt also keine Unterbrechung der Integration der Detektorelemente. Eine Unterbrechung kann aufgrund der beschriebenen entgegengesetzten Bewegungen entfallen. So wird eine Messung der Detektorelemente auch während einem Positionswechsel des Beleuchtungsmusters und der Empfangsbereiche der Detektorelemente fortgesetzt. Hierdurch sinkt der erforderliche Zeitbedarf und/oder das Signal-zu-Rausch-Verhältnis kann verbessert werden.

Für die Aufnahme eines Probenbilds können die Detektorelemente empfangene Probenlichtsignale durchgängig integrieren. Das heißt, jedes Detektorelement braucht nur einmal ausgelesen zu werden, um das Probenbild zu erzeugen. Hiermit gehen erhebliche Vereinfachungen einher gegenüber dem oben mit Bezug auf Fig. 1 beschriebenen Verfahren, bei dem für jede Position des Beleuchtungsspots ein Auslesen der Detektorelemente erforderlich ist.

Weitere vorteilhafte Varianten des erfindungsgemäßen Verfahrens ergeben sich durch den Betrieb der Ausgestaltungen des erfindungsgemäßen Lichtmikroskops. Zudem sind die Elektronikmittel bevorzugt zur automatischen Ausführung der oben beschriebenen Verfahrensvarianten eingerichtet.

Die Erfindung kann auch als ein Bildgebungsverfahren beschrieben werden, bei dem Relativbewegungen zwischen einer strukturierten Beleuchtung (Spot(s), Linie(n)), einer Probe und einer Detektion derart erfolgen, dass eine erste Relativbewegung zwischen der strukturierten Beleuchtung und der Probe erfolgt und dass eine zweite Relativbewegung zwischen der Detektion und der Probe erfolgt, wobei die erste Relativ-Bewegung gleichzeitig und vorzugsweise entgegengesetzt zu der zweiten Relativbewegung erfolgt.

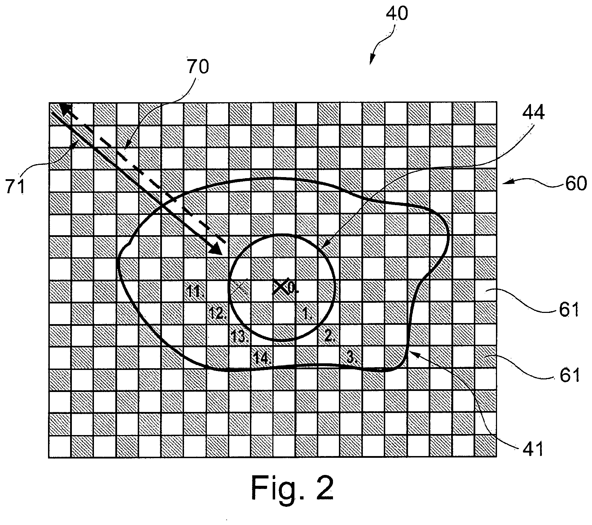

Es kann also vorgesehen sein, dass eine erste Relativbewegung des BeleuchtungsSpots gegenüber der Probe und eine zweite Relativbewegung der Detektionseinrichtung bestehend aus Sub-Airy Detektorelementen bezüglich der Probe derart erfolgt, dass die erste Relativ-Bewegung und die zweite Relativbewegung entgegengesetzt und gleichzeitig erfolgen, siehe insbesondere Fig. 2.

Die Relativbewegung ermöglicht, dass sich in einer Ausgestaltung des Verfahrens außer dem Beleuchtungsspot auch die Probe in der Probenebene des Lichtmikroskops bewegt. Die Bewegung der Probe erfolgt dabei in die gleiche Richtung wie die des Beleuchtungsspots in der Probenebene, bevorzugt aber nur mit halber Schrittweite und/oder halber Geschwindigkeit, die der Beleuchtungsspot in der Probenebene während der Bewegung innehat. Die Detektionseinrichtung und deren Bild in der Probenebene bewegen sich in dieser Ausführungsvariante bevorzugt nicht.

Somit ist hier vorgesehen, dass die Detektionseinrichtung in einer Probenebene ruht, eine Bewegung der Probe und der strukturierten Beleuchtung erfolgt, wobei die Probe in einer Probenebene sich stets in die gleiche Richtung wie die strukturierte Beleuchtung in einer Probenebene bewegt. Die Probe bewegt sich vorzugsweise mit halber Schrittweite und/oder halber Geschwindigkeit bzgl. der Schrittweite und/oder Geschwindigkeit der strukturierten Beleuchtung.

Eine weitere Ausgestaltung des Verfahrens besteht darin, dass der Beleuchtungsspot in der Probenebene ruht und dass sich die Probe und die Detektionseinrichtung bzw. deren Bild in der Probenebene bewegen. Die Bewegung der Probe erfolgt dabei in die gleiche Richtung wie die des Bildes der Detektionseinrichtung in der Probenebene, bevorzugt aber nur mit halber Schrittweite und/oder halber Geschwindigkeit, die das Bild der Detektionseinrichtung in der Probenebene während der Bewegung innehat.

Folglich ist bei dieser Ausgestaltung vorgesehen, dass die strukturierte Beleuchtung in einer Probenebene ruht und dass eine Bewegung der Probe und der Detektion erfolgt. Dabei bewegt sich die Probe stets in die gleiche Richtung wie die Detektionseinrichtung in einer Probenebene, das heißt wie eine Abbildung der Detektionseinrichtung in die Probenebene. Die Probe bewegt sich vorzugsweise mit halber Schrittweite und/oder halber Geschwindigkeit bzgl. der Schrittweite und/oder Geschwindigkeit des Bildes der Detektor- oder Detektionseinrichtung in der Probenebene.

In einer technisch bevorzugten Ausgestaltung des Verfahrens ruht die Probe in der Probenebene des Lichtmikroskops und die Detektionseinrichtung bzw. deren Bild in der Probenebene bewegt sich in die entgegengesetzte Richtung mit vorzugsweise gleicher Schrittweite und/oder gleicher Geschwindigkeit, mit der sich der Beleuchtungsspot in der Probenebene bewegt. Wenn die Detektionseinrichtung sich selbst bewegt, dann bewegt sie sich real um eine Distanz, die mit dem Abbildungsmaßstab von der Probenebene in die Detektionsebene skaliert.

Demnach ist insbesondere vorgesehen, dass die Probe in einer Probenebene ruht und eine Bewegung der Detektion und der strukturierten Beleuchtung erfolgt. Es ist bevorzugt, dass das Bild der Detektionseinrichtung in einer Probenebene eine zur strukturierten Beleuchtung in einer Probenebene stets entgegengesetzte und gleichzeitige Bewegung mit vorzugsweise betragsmäßig gleicher Schrittweite und/oder gleicher Geschwindigkeit ausführt.

Die diametrale, das heißt entgegengesetzte, Bewegung der Detektionseinrichtung oder des Bildes von dieser in der Probenebene relativ zur strukturierten Beleuchtung kann ausgeführt sein, indem die Detektionseinrichtung selbst bewegt wird (bereits genannt).

Alternativ kann eine weitere 1D- oder 2D-Scan-Einrichtung vorgesehen sein. So kann die diametrale Relativbewegung der Detektionseinrichtung oder des Bildes von dieser in der Probenebene relativ zur strukturierten Beleuchtung durch eine weitere Galvanometer- und/oder MEMS-Scan-Einrichtung im Detektionsstrahlengang ausgeführt sein.

Zudem kann eine planparallele, um mindestens eine Achse kippbare (Glas-)Platte oder mindestens ein verschiebbares keilförmiges (Glas-)Substrat zusätzlich in den Detektionsstrahlengang nach der Farbteilung durch einen Farbteiler vor der Detektionseinrichtung eingefügt sein.

Demnach kann vorgesehen sein, dass die diametrale Bewegung der Detektionseinrichtung oder des Bildes von dieser in der Probenebene relativ zur strukturierten Beleuchtung durch eine planparallele um mindestens eine Achse kippbare Glasplatte oder mindestens ein verschiebbares keilförmiges Glassubstrat im Detektionsstrahlengang ausgeführt ist.

Das Verfahren funktioniert nicht nur mit einem Beleuchtungsspot im klassischen Sinne, das Verfahren kann mit jeder Art von strukturierter Beleuchtung eine Auflösungsverbesserung liefern. Weitere Formen einer strukturierten Beleuchtung sind beispielsweise Multi-Spot-Beleuchtungs-Anordnungen, eine Linie, Vielfach-Linien-Beleuchtungs-Anordnungen. Bei einer Linienbeleuchtung ergibt sich eine Auflösungsverbesserung senkrecht zur Linie. Es ist aber möglich, anschließend die Linie bezüglich der Probe zu rotieren und damit eine Auflösungsverbesserung in weitere Richtungen zu erhalten, analog zur strukturierten Beleuchtungsmikroskopie (SIM).

Eine notwendige Anforderung an eine bevorzugte Ausführungsform des Verfahrens besteht darin, dass eine Steuereinheit die Synchronisierung der notwendigen Relativbewegungen der strukturierten Beleuchtung, der Probe und der Detektionseinrichtung in erfindungsgemäßer Weise durchführt.

Die diametrale Bewegung der Detektionseinrichtung oder des Bildes von dieser in der Probenebene relativ zur strukturierten Beleuchtung kann erfindungsgemäß auch dadurch ausgeführt sein, dass die Scan-Einrichtung, die in den Figuren mit dem Bezugszeichen 20 versehen ist, vom Probenlicht dreimal durchlaufen wird: Einmal vor der Farbteilung durch den Farbteiler und zweimal nach der Farbteilung in Richtung der Detektionseinrichtung. Dadurch durchläuft das Probenlicht zweimal mehr die Scan-Einrichtung als das Beleuchtungslicht. Infolgedessen wird die durch die Scan-Einrichtung vor der Farbteilung eingeführte Winkeländerung der optischen Achse nicht nur kompensiert, wie im Fall eines einfachen Durchlaufens der Scan-Einrichtung, sondern überkompensiert. Dadurch steht die optische Achse nicht statisch auf der Detektionseinrichtung, sondern bewegt sich um die halbe Strecke auf der Detektionseinrichtung, um die sich das von dem Beleuchtungsspot erzeugte Probenlicht bewegt. Damit werden die genannten, für das Verfahren notwendigen Relativbewegungen zwischen Probe, strukturierter Beleuchtung und Detektionseinrichtung erreicht. Auf eine zweite Scan-Einrichtung, die in den Figuren mit dem Bezugszeichen 50 gekennzeichnet ist, kann bei dieser Ausführungsform verzichtet werden. Vorteilhafterweise ist dadurch auch eine Synchronisierung der Bewegung einer zusätzlichen Scan-Einrichtung nicht erforderlich.

Durchläuft das Probenlicht nur einmal die Scan-Einrichtung 20 und wird anschließend detektiert, so spricht man von einer descannenden Detektion. Durchläuft das Probenlicht einmal die Scan-Einrichtung 20 und mindestens eine weitere Scan-Einrichtung 50, so wird von einem sogenannten Rescan gesprochen. Wenn es sich bei der Scan-Einrichtung 50 um die Scan-Einrichtung 20 handelt, so muss das Probenlicht zweimal über die Scan-Einrichtung 20 nach dem ersten Durchgang über die Scan-Einrichtung 20 propagieren, damit das Verfahren funktionieren kann.

Bei einer bevorzugten Ausgestaltung weist das Mikroskop Mittel für einen Rescan des Probenlichtes über die Scan-Einrichtung 20 und/oder die zweite Scan-Einrichtung 50 auf.

Eine Scan- oder Abtast-Einrichtung kann auch ein während der Detektion des Probenlichtes bewegtes Gitter bzw. die daraus resultierende in der Probenebene bewegte strukturierte Linienbeleuchtung darstellen.

Die zuvor genannten erfindungsgemäßen Ausführungsformen der Relativbewegung der Detektionseinrichtung, wie z.B. die planparallele Platte oder die Scan-Einrichtung 50 im Detektionsstrahlengang können als Ausgestaltungen der Scan-Einrichtung 50 aufgefasst werden.

Eine besondere Variante des erfindungsgemäßen Verfahrens ist dadurch gegeben, dass die Detektionseinrichtung, z.B. ein Kamera-Chip, während der gesamten Scanzeit oder Belichtungszeit integriert. Es ist weder ein zwischenzeitliches Auslesen der Detektionseinrichtung oder von Teilen derselben, noch die Erzeugung von stehenden strukturierten Beleuchtungsmustern notwendig.

Eine weitere Ausführungsvariante des erfindungsgemäßen Verfahrens ist dadurch gegeben, dass sich jeder einem Detektorelement zugeordnete Probenpunkt der Probe in der Mitte zwischen dem Beleuchtungsspot und dem Detektorelement während des gesamten Abtastens der Probe befindet. Die Zuordnung erfolgt zu Beginn des Abtastvorgangs: Der Probenpunkt, der einem Detektorelement zugeordnet wird, liegt zwischen dem Beleuchtungsspot und dem Detektorelement.

Das erfindungsgemäße Verfahren kann nicht nur im Bereich der Lichtmikrokopie angewendet werden. Es liefert immer dann Bilder mit erhöhter Auflösung, sobald mit einer Sonde, die Welleneigenschaften besitzt, in einem abbildenden System, das der Beugung unterliegt, eine Probe strukturiert abgetastet wird und die Sub-Struktur der Probenantwort, also das Probensignal, deutlich unterhalb der Beugungsgrenze ortsaufgelöst detektiert wird. Das heißt, das Verfahren könnte beispielsweise auch in der Elektronenmikroskopie zur Anwendung kommen.

Es sei darauf hingewiesen, dass in der Materialmikroskopie, insbesondere in der Profilometrie, auch die Phasenfunktion der Probe bestimmt wird. Somit muss dort bei Anwendung des Verfahrens phasensensitiv detektiert werden. Hier eignet sich beispielsweise ein interferometrisches Messverfahren, das in die erfindungsgemäße Art von notwendiger Detektion integriert werden muss. Eine einfache Umsetzung eines interferometrischen Messverfahrens kann mittels Mirau-Objektiv erfolgen, die Referenzwelle wird im Objektiv selbst erzeugt.

Besonders vorteilhaft lässt sich das beschriebene Verfahren mit einer oder mehreren der folgenden Methoden zur Superauflösung kombinieren:
1. STED / RESOLFT:
   Die PSF-Manipulation, die bei Verfahren wie STED (stimulated emission depletion) und RESOLFT (reversible saturable optical flurorescence transitions) in ihren verschiedensten Ausführungen (g-STED, cw-STED etc.) zum Tragen kommt, lässt sich bei geeigneter Abtastfrequenz des Detektors (Nyquist zur finalen Auflösung) direkt mit dem beschriebenen Verfahren ohne wesentliche Änderungen kombinieren. Lediglich die beschriebene Relativbewegung sowie die Synchronisation mit der Integrationszeit des Detektors werden entsprechend angepasst. Diese Kombination ist besonders vorteilhaft für die Bildgebung von Lebendzellen, da der Auflösungsgewinn über das hier beschriebene Verfahren weitgehend ohne zusätzliches Photonenbudget erzeugt wird. Lediglich das zusätzliche Dunkel- und Ausleserauschen der verschiedenen Detektorelemente käme hinzu. Bei geeigneter Detektorwahl kann dieses aber zum Beispiel im Photon-Counting-Modus stark reduziert werden.
2. SOFI
   Wie beschrieben in DE 10 2011 077 269 lässt sich das SR-Verfahren gut mit SOFI (super-resolution optical fluctuation imaging) kombinieren. Hier kommt neben den bereits diskutierten Vorteilen hinzu, dass die Verrechnung alleine SOFI-basiert bleibt, sodass neben der Einfachheit auch die Verrechnungszeit signifikant verkürzt wird.
3. NSIM
   Das hier beschriebene Verfahren lässt darüber hinaus auch einen dem NSIM verwandten nichtlinearen Modus zu, der entweder durch Schalten von Farbstoffmolekülen oder Saturierung des Farbstoffes die strukturierte Beleuchtung effektiv höherfrequent macht.

Zur Erhöhung der Bildaufnahmegeschwindigkeit kann das erfindungsgemäße Verfahren mit einer Multi-Spotbeleuchtung ausgeführt werden. Dann ist dafür Sorge zu tragen, dass die eindeutige Zuordnung zwischen Probenpunkt und Detektorelement nicht dadurch verloren geht, dass ein Detektorelement in den Einflussbereich eines oder mehrerer weiterer Beleuchtungsspots gerät. D.h. man muss dann Lücken im Bildbereich erzeugen und anschließend weitere Bilder von der Probe, die diese Lücken schließen, aufnehmen. Andernfalls bekommt man mehrere gegeneinander verschobene Bilder der Probe in einem Bild aufaddiert. Dieses Merkmal gilt auch für andere Arten von strukturierter Beleuchtung, also beispielsweise auch für Multi-LinienBeleuchtung.

In einer bevorzugten Ausführungsform des Verfahrens ist vorgesehen, eine quasi-konfokale Filterung mindestens in den Detektionsstrahlengang nach der Farbteilung einzufügen. Der Durchmesser der konfokalen Blende beträgt bevorzugt 1 bis 2 Airy. Unterhalb von einem Airy Durchmesser der konfokalen Blende wird das Signal-zu-Rausch-Verhältnis reduziert. Ein großer Durchmesser der konfokalem Blende (> 2 Airy) führt bei dicken Proben zu einem höheren Anteil von außerfokalem Probenlicht im detektierten Signal und wirkt sich nachteilig auf die Qualität der Bilder aus.

Eine Ausführungsform des Verfahrens kann auch darin bestehen, dass das Verfahren mit einer Multi-Spot-Beleuchtung und mit quasi-konfokaler Detektion kombiniert wird.

Die Erfindung umfasst auch ein Mikroskop, insbesondere zur Durchführung des erfindungsgemäßen Verfahrens, welches aufweist: eine Probenebene, in welcher eine zu untersuchende Probe positionierbar ist; mindestens eine Lichtquelle zum Aussenden von Beleuchtungslicht in Richtung der Probenebene; eine Strahlformungseinheit zur Erzeugung einer strukturierten Beleuchtung auf der Probe und eine Detektionseinheit mit mindestens einer Detektionseinrichtung, die insbesondere aus einer Vielzahl von Sub-Airy-Detektorelementen besteht. Zudem umfasst das Mikroskop eine erste Scan-Einrichtung zur Verschiebung der strukturierten Beleuchtung in einer Probenebene und / oder eine zweite Scan-Einrichtung zur Verschiebung des Probenlichtes auf der Detektionseinrichtung und / oder eine Einrichtung für die Bewegung der Detektionseinrichtung und / oder eine Verschiebe-Einheit 45 zur Verschiebung der Probe in der Probenebene. Weiterhin weist das Lichtmikroskop mindestens eine Steuereinheit auf, die die erste Scan-Einrichtung und / oder die zweite Scan-Einrichtung und / oder die Einrichtung zur direkten Bewegung der Detektionseinrichtung und / oder die Verschiebe-Einheit für eine Bewegung steuert. Dabei ist vorgesehen, dass die Steuereinheit die erste Scan-Einrichtung und / oder die zweite Scan-Einrichtung und / oder die Einrichtung zur direkten Bewegung der Detektionseinrichtung und / oder die Verschiebeeinheit derart ansteuert, dass Relativbewegungen zwischen strukturierter Beleuchtung, Probe und Detektion derart ausgeführt werden, dass eine erste Relativbewegung zwischen der strukturierten Beleuchtung und der Probe erfolgt und dass eine zweite Relativbewegung zwischen der Detektion und der Probe erfolgt, wobei die erste Relativ-Bewegung gleichzeitig und vorzugsweise entgegengesetzt zu der zweiten Relativbewegung erfolgt.

Bei einer bevorzugten Variante der Erfindung ist vorgesehen, dass die Steuereinheit die erste Scan-Einrichtung, die zweite Scan-Einrichtung und / oder die Einrichtung zur Verschiebung der Detektionseinrichtung und Verschiebeeinheit derart ansteuert, dass die Probe in der Probenebene während Bildaufnahme ruht, eine Bewegung der Detektion und der strukturierten Beleuchtung erfolgt, dass das Bild der Detektionseinrichtung in einer Probenebene eine zur strukturierten Beleuchtung in einer Probenebene stets entgegengesetzte und gleichzeitige Bewegung mit vorzugsweise betragsmäßig gleicher Schrittweite und/oder gleicher Geschwindigkeit ausführt.

Bei einer weiteren bevorzugten Variante ist vorgesehen, dass die Steuereinheit die erste Scan-Einrichtung, die zweite Scan-Einrichtung und / oder die Einrichtung zur Verschiebung der Detektionseinrichtung und Verschiebeeinheit derart ansteuert, dass die Detektionseinrichtung bzw. deren Bild in der Probenebene während der Bildaufnahme ruht, eine Bewegung der Probe und der strukturierten Beleuchtung erfolgt, wobei die Probe in einer Probenebene sich stets in die gleiche Richtung wie die strukturierte Beleuchtung in einer Probenebene bewegt. Die Probe bewegt sich bevorzugt mit halber Schrittweite und/oder halben Geschwindigkeit bezüglich der Schrittweite und/oder Geschwindigkeit der strukturierten Beleuchtung.

Alternativ oder zusätzlich kann vorgesehen sein, dass die Steuereinheit die erste Scan-Einrichtung, die zweite Scan-Einrichtung und / oder die Einrichtung zur Verschiebung der Detektionseinrichtung und / oder die Verschiebeeinheit derart ansteuert, dass die strukturierte Beleuchtung in der Probenebene ruht, eine Bewegung der Probe und der Detektion erfolgt, wobei die Probe sich stets in die gleiche Richtung wie die Detektionseinrichtung in einer Probenebene bewegt. Die Probe bewegt sich vorzugsweise mit halber Schrittweite und/oder halber Geschwindigkeit bezüglich der Schrittweite und/oder Geschwindigkeit des Bildes der Detektionseinrichtung in der Probenebene.

Es kann vorgesehen sein, dass das Mikroskop ein Weitfeldmikroskop ist und das Probenlicht nicht über die Scan-Einrichtung propagiert, über die das Beleuchtungslicht abgelenkt wird.

Schließlicht umfasst die Erfindung auch ein Mikroskop mit einer Probenebene, in welcher eine zu untersuchende Probe positionierbar ist, mit mindestens einer Lichtquelle zum Aussenden von Beleuchtungslicht in Richtung der Probenebene, mit einer Strahlformungseinheit zur Erzeugung einer strukturierten Beleuchtung auf der Probe, mit einer Scan-Einrichtung zur Verschiebung der strukturierten Beleuchtung auf der Probe, mit einer Detektionseinheit mit mindestens einer Detektionseinrichtung, die aus einer Vielzahl von Sub-Airy-Detektorelementen besteht, und mit mindestens einer Steuereinheit, die die erste Scan-Einrichtung und die Detektionseinheit steuert. Bei dem Mikroskop ist vorgesehen, dass die Probe in der Probenebene während Bildaufnahme ruht, dass das Probenlicht über die Scan-Einrichtung und anschließend durch mindestens eine quasi-konfokale Blende propagiert, um vor der Detektionseinrichtung einen zweifachen Rescan durch die Scan-Einrichtung zu erfahren, und dass infolgedessen das Bild der Detektionseinrichtung in der Probenebene eine gleichzeitige und vorzugsweise zur strukturierten Beleuchtung in der Probenebene entgegengesetzte Bewegung mit vorzugsweise betragsmäßig gleicher Schrittweite und / oder Geschwindigkeit ausführt.

Weitere Merkmale und Vorteile der Erfindung werden im Folgenden in Bezug auf die beigefügten schematischen Figuren beschrieben. Hierin zeigen:
- Fig. 1: Prinzip der Signalentstehung, insbesondere bei der Akkumulation der Signale der verschobenen Detektorelemente;
- Fig. 2: Darstellung eines Beleuchtungsspots und der Detektionseinrichtung in der Probenebene zu einem Zeitpunkt;
- Fig. 3: Darstellung eines Beleuchtungsspots und der Detektionseinrichtung in der Probenebene zu einem anderen Zeitpunkt, wobei der Beleuchtungsspot in der Probenebene verschoben ist und die Detektionseinrichtung in der Probenebene dazu diametral verschoben ist;
- Fig. 4: simulierte Messergebnisse für eine diametral zum Beleuchtungsspot scannende Detektionseinrichtung im Vergleich zur normalen inkohärenten Weitfeldbeleuchtung bei Wechselwirkung des Beleuchtungsspots mit drei nebeneinander liegenden fluoreszierenden Sub-Airy-Farbstoffkügelchen;
- Fig. 5: ein erstes Ausführungsbeispiel eines erfindungsgemäßen Lichtmikroskops;
- Fig. 6: ein zweites Ausführungsbeispiel eines erfindungsgemäßen Lichtmikroskops mit quasi-konfokaler Filterung und mit einem Rescan im Detektionsstrahlengang und
- Fig. 7: ein drittes Ausführungsbeispiel eines erfindungsgemäßen Lichtmikroskops mit quasi-konfokaler Filterung und mit doppeltem Rescan-Winkel im Detektionsstrahlengang.

Gleiche und gleichwirkende Komponenten sind in den Figuren in der Regel mit denselben Bezugszeichen versehen.

Die Ableitung des Kerngedankens der Erfindung kann anhand der Fig. 1 vollzogen werden: Zum konfokalen Signal von einem fluoreszierenden Farbstoffkügelchen 42, das einem Probenpunkt bzw. Bildpunkt zugeordnet wird, trägt nicht nur das Sub-Airy-Detektorelement 61A, was mit der Probenposition und der Mitte der Beleuchtungs-PSF 44 zusammenfällt, bei. Sondern auch Detektorelemente, die sich vom Probenpunkt aus betrachtet auf der zum Beleuchtungsspot 44 gegenüberliegenden Seite befinden, tragen zum Signal bei. Da der Beleuchtungsspot 44 sich bewegt, sind damit auch unterschiedliche Zeitpunkte bzw. Positionen des Beleuchtungsspots 44 verknüpft. Unter Position ist hier die Mitte des symmetrischen Beleuchtungsspots 44 zu verstehen.

Durch die Erfindung kann vorteilhafterweise das zuvor beschriebene Umsortieren vermieden werden, bei welchem die Empfangssignale eines bestimmten Detektorelements abhängig vom der Position des Beleuchtungsspots verschiedenen Probenpositionen zugeordnet werden.

Gemäß der Erfindung erfolgt eine Bewegung derart, dass sich das 0. Detektorelement während der Bewegung des Beleuchtungsspots 44 immer an den Positionen der Detektorelemente 61 befindet, die bisher bei der Umsortierung der Daten verwendet wurden. Damit dies stattfindet, kann eine entgegengesetzte Bewegung zwischen strukturierter Beleuchtung 44 und der gesamten pixelierten Detektionseinrichtung 60 erfolgen.

Der Beleuchtungsspot wird gemäß einer Beleuchtungsabtastbewegung 70 über das Farbstoffkügelchen oder die Probe 42 bewegt. Die Detektoreinrichtung 60 wird entgegengesetzt hierzu gemäß einer Detektionsabtastbewegung 71 bewegt.

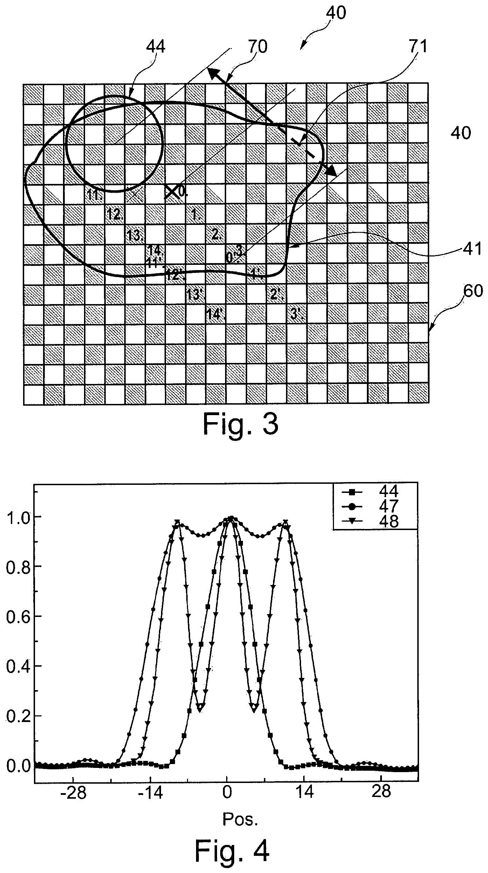

Die Fig. 2 und 3 zeigen zwei verschiedene Positionen von Beleuchtungsspot 44 und der Detektionseinrichtung 60 relativ zur Probe 41 in der Probenebene 40. Die an der Detektionseinrichtung 60 willkürlich festgelegten Ordnungszahlen beziehen sich auf Detektorelemente 61 der Detektionseinrichtung 60 und wie anhand von Fig. 2 und 3 deutlich wird, auch auf korrespondierende Positionen des Beleuchtungsspots 44.

Durch die beiden Pfeile sind eine erste Relativbewegung der Detektionseinrichtung 60 gegenüber der Probe 41 eingetragen, welche als Detektionsabtastbewegung 71 bezeichnet wird, sowie eine hierzu entgegengesetzte zweite Relativbewegung des Beleuchtungsspots 44 gegenüber der Probe 41, welche als Beleuchtungsabtastbewegung 70 bezeichnet wird.

In den beiden Figuren 2 und 3 sind zwei Probenpunkte durch ein X und ein gestricheltes X hervorgehoben. Die beiden dazugehörigen Detektorelemente 61 sind in Figur 2 willkürlich als 0. bzw. 11. Detektorelement bezeichnet. Sie werden bei Bewegung des Beleuchtungsspots 44 entgegengesetzt dazu von den dazugehörigen Probenpunkten (X und gestricheltes X) wegbewegt und sind in Figur 3 nach der Verschiebung jeweils mit einem Apostroph markiert. Es besteht immer eine Symmetrie derart, dass der Probenpunkt mittig zum Beleuchtungsspot 44 und zum dazugehörigen Sub-Airy-Detektorelement 61 positioniert ist. Anders formuliert befindet sich das zum Probenpunkt gehörende Sub-Airy-Detektorelement 61 gegenüberliegend zum Beleuchtungsspot 44 und dies gilt für jedes zu einem Probenpunkt gehörende Sub-Airy-Detektorelement 61.

Die Figuren 2 und 3 verdeutlichen, dass während des Scannens eines Beleuchtungsspots 44 über die Probe 41 der Detektor 60 nicht gestoppt werden muss, es entsteht ein lückenloses Bild der Probe 41 mit verbesserter Auflösung.

Bei Anwendung des erfindungsgemäßen Verfahrens ist der abgebildete Probenbereich der Probe 41 in seiner x/y-Ausdehnung jeweils halb so groß wie die Detektionseinrichtung 60.

Fig. 4 zeigt Simulationsergebnisse zu dem erfindungsgemäßen Verfahren im Vergleich zur inkohärenten Weitfeldbeleuchtung. Dargestellt ist eine Lichtintensität I gegen eine Position Pos in der Probenebene. Die Einheiten sind willkürlich. In der Probenebene befinden sich drei nebeneinanderliegende fluoreszierende Farbstoffkügelchen, etwa an den Positionen -10, 0 und +10. Eingetragen ist zunächst der Intensitätsverlauf eines Beleuchtungsspots 44. Zudem ist der räumliche Signalverlauf (ohne Rauschen) nach Wechselwirkung des Beleuchtungsspots 44 mit den drei Farbstoffkügelchen auf einer Detektionseinrichtung angegeben, welche aus mehreren Detektionselementen besteht. Dieser Signalverlauf ist als Kurve 47 für ein herkömmliches inkohärentes Weitfeldfluoreszenz-Mikroskop sowie als Kurve 48 für ein erfindungsgemäßes Lichtmikroskop angegeben.

Die Verbesserung der Auflösung im Vergleich zur inkohärenten Weitfeldfluoreszenz-Mikroskopie ist bereits ohne mathematische Verrechnung deutlich sichtbar. Die in der inkohärenten Weitfeldfluoreszenz-Mikroskopie erreichbare Auflösung entspricht ca. der Auflösung in der Laser-Scanning-Mikroskopie, wenn mit einem Pinhole-durchmesser von einem Airy vor dem Detektor gearbeitet wird.

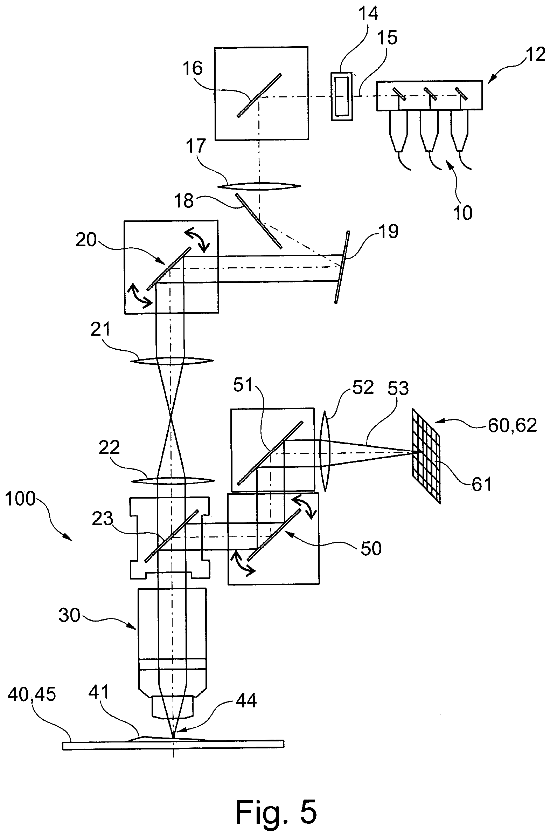

Fig. 5 zeigt eine Ausführungsform des erfindungsgemäßen Lichtmikroskops 100 und des erfindungsgemäßen Verfahrens. Beleuchtungslicht 15 von einer Lichtquelle 10 kommend propagiert über eine Spiegeltreppe 12, eine akustooptische Vorrichtung 14 und mehrere Optikkomponenten 16, 17, 18, 19 zur Scan-Einrichtung 20. Diese ermöglicht die Bewegung des Beleuchtungsspots 44 über die Probe 41. Eine Optik 21 erzeugt den Beleuchtungsspot 44 vorerst in einem Zwischenbild zwischen den Optiken 21 und 22. Anschließend tritt das Beleuchtungslicht 15 in das Objektiv 30 ein, welches dann in der Probenebene 40 den beugungsbegrenzten Beleuchtungsspot 44 erzeugt.

In der Probe 41 entsteht nach Wechselwirkung mit dem Beleuchtungsspot 44 Probenlicht 53. Dieses wird mit einem Farbteiler 23 in Richtung einer Detektionseinrichtung 60 abgelenkt. Der Farbteiler 23 kann wellenlängenabhängig Licht transmittieren oder reflektieren. Das Probenlicht 53 wird dabei, nachdem es über die Scan-Einrichtung 50 und den Spiegel 51 propagiert ist, durch eine Fokussieroptik 52 auf die Detektionseinrichtung 60 abgebildet. Die Optikmittel zum Abbilden verschiedener Probenbereiche auf unterschiedliche Detektorbereiche der Detektoreinrichtung umfassen hier also die Komponenten 30, 23, 51 und 52.

Die in Fig. 5 angegebene zweite Scan-Einrichtung 50 wird benötigt, um die für das Verfahren benötigte diametrale Relativbewegung der Detektionseinrichtung 60 relativ zum Beleuchtungsspot 44 im Fall einer ruhenden Probe 41 erzeugen zu können. D.h. die Detektionseinrichtung 60 wird hier nicht selbst bewegt. Diese Ausführungsform bietet den Vorteil einer realisierbaren höheren Scan-Geschwindigkeit. Die Scanner-Technologie ist eine weitestgehend ausgereifte Technologie.

Prinzipiell kann aber auch eine Probenhalterung 45, welche die Probe 44 in der Probenebene 40 hält, verstellt werden. Hierdurch kann die Probe 44 relativ zum Beleuchtungslicht 15 oder relativ zur Detektionseinrichtung 60 bewegt werden. Somit kann über eine Verschiebung der Probenhalterung 45 eine Beleuchtungsabtastbewegung oder eine Detektionsabtastbewegung erfolgen. Die Probenhalterung kann auch als Verschiebeeinheit 45 bezeichnet werden.

Eine Steuereinheit, die die Synchronisation zwischen der Scan-Einrichtung 20 für das strukturierte Beleuchtungslicht 44 und der Scan-Einrichtung 50 für das Probenlicht 53 durchführt, ist in der Abbildung nicht gezeigt. Die Steuereinheit hat die Aufgabe, dafür zu sorgen, dass die beiden Scan-Einrichtungen 20 und 50 diametrale Relativbewegungen in der Probe 41 bewirken. Die Steuereinheit steuert außerdem (nicht dargestellt) die Integrationszeit bzw. das Auslesen der Detektionseinrichtung 60. Auf diese Weise wird die erfindungsgemäße Auflösungssteigerung ermöglicht.

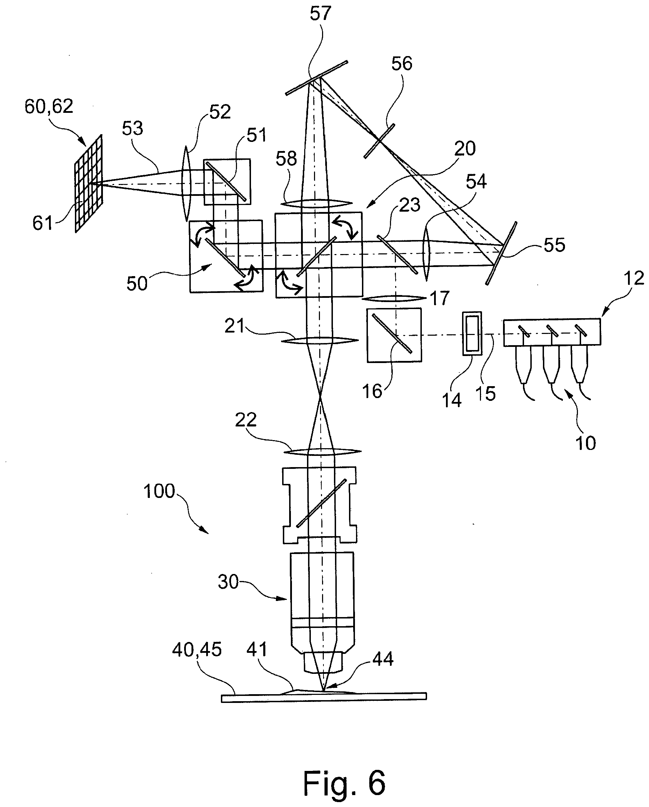

Fig. 6 zeigt eine weitere Ausführungsform des erfindungsgemäßen Lichtmikroskops 100 und des erfindungsgemäßen Verfahrens. Im Unterschied zu Fig. 5 läuft das Probenlicht 53 über die erste Scan-Einrichtung 20 in Richtung Detektionsebene 62, in welcher sich die Detektionseinrichtung 60 befindet.

Das Probenlicht 53 kann zunächst auf eine Vorderseite eines Scanspiegels der Scan-Einrichtung 20 treffen, über welche auch das Beleuchtungslicht abgelenkt wird. Nach der Scan-Einrichtung 20 passiert das Probenlicht 53 den Farbteiler 23 und wird von einer Optik 54 und über einen Spiegel 55 in eine Bildebene fokussiert. In dieser Bildebene befindet sich eine konfokale Blende 56. Für die Durchführung des Verfahrens wird die Blende 56 auf einen Durchmesser ≥ 1Airy eingestellt. Ein kleinerer Blendendurchmesser wird für die Erlangung einer erhöhten Auflösung nicht benötigt und würde das Signal-zu-Rausch-Verhältnis reduzieren. Bei einem Blendendurchmesser von 1-2 Airy wird außerfokales Licht bereits effektiv unterdrückt.

Nachdem das Probenlicht 53 die Blende 56 passiert hat, wird es über einen Spiegel 57 weitergeleitet und von einer Optik 58 kollimiert. Das Probenlicht 53 kann auf eine Rückseite des Scanspiegels der Scan-Einrichtung 20 und von dort zur Scan-Einrichtung 50 geleitet werden. Sodann wird das Probenlicht 53 von der Scan-Einrichtung 50 in Richtung der Detektionseinrichtung 60 gelenkt und über diese synchron zur Bewegung des Beleuchtungsspots 44 in der Probenebene 40 bewegt. Dadurch entsteht ein Bild der Probe 41 auf der Detektionseinrichtung 60.

Die sich im Probenlichtstrahlengang anschließende zweite Scan-Einrichtung 50 bewirkt die diametrale Relativbewegung der Detektionseinrichtung 60 bezüglich des Beleuchtungsspots 44 für eine ruhende Probe 41. Die Scan-Einrichtung 50 bewirkt eine Verschiebung der optischen Achse relativ zur Detektionseinrichtung 60, was die Scan-Einrichtung 20 in dieser Ausführungsform nicht bewirken kann.

Die Verschiebung der optischen Achse relativ zur Detektionseinrichtung 60 bewirkt die Relativverschiebung zwischen Probe 41 und Detektionseinrichtung 60.

Die beiden Scan-Einrichtungen 20 und 50 müssen in ihrer Bewegung durch eine Steuereinheit zueinander in geeigneter Weise synchronisiert sein. Die dazu erforderliche Steuereinheit oder die erforderlichen Elektronikmittel sind nicht dargestellt.

Der Strahlverlauf des Probenlichtes 53 von der Optik 58 zur Detektionseinrichtung 60 kann - wie in Fig. 6 dargestellt - über zwei Scan-Einrichtungen 20 und 50 erfolgen. Alternativ ist es möglich, die Bewegung des Probenlichts 53 über eine einzelne Scan-Einrichtung zu realisieren, die einen doppelt so großen Versatz des Probenlichtes 53 auf der Detektionseinrichtung 60 erzeugt. Auf diese Weise wird die erfindungsgemäße diametrale Verschiebung zwischen Beleuchtungslicht 15 und Probenlicht 53 auf der Detektionseinrichtung 60 relativ zur Probe 41 realisiert.

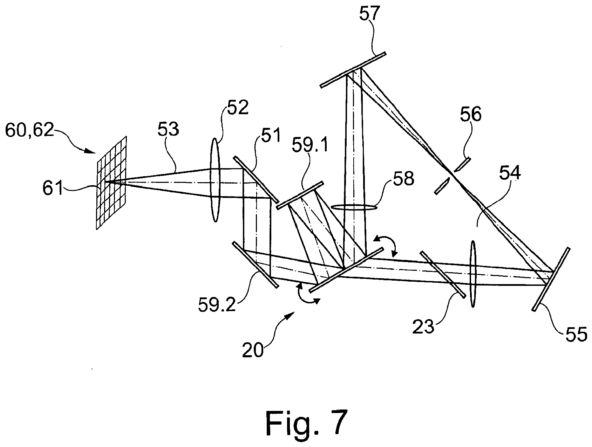

Fig. 7 zeigt den Detektionsstrahlgang einer Ausführungsform des erfindungsgemäßen Lichtmikroskops. Im Unterschied zu Fig. 6 befindet sich keine zweite Scan-Einrichtung 50 auf dem Weg des Probenlichtes 53 zur Detektionseinrichtung 60. Zudem wird bei Fig. 7 das Probenlicht 53 mit Hilfe eines Spiegels 59.1 zweimal über die Scan-Einrichtung 20 und über einen Spiegel 59.2 weiter in Richtung der Detektionseinrichtung 60 propagiert. Dadurch wird die durch die Scan-Einrichtung 20 eingeführte Winkeländerung der optischen Achse nicht durch die zweite Wechselwirkung mit der Scan-Einrichtung 20 durch die Reflexion an z.B. der Rückseite kompensiert, sondern überkompensiert. Somit steht die optische Achse nicht statisch auf der Detektionseinrichtung 60. Vielmehr bewegt sie sich auf der Detektionseinrichtung 60 um die halbe Strecke, um welche sich das von dem Beleuchtungsspot 44 erzeugte Probenlicht 53 bewegt. Damit wird die genannte für das Verfahren notwendige Relativbewegung zwischen Probe 41, strukturierter Beleuchtung 44 und Detektionseinrichtung 60 erreicht.

Mit dem erfindungsgemäßen Lichtmikroskop und dem erfindungsgemäßen Verfahren kann vorteilhaftweise erreicht werden, dass ein Probenbild besonders hoher Auflösung schnell und mit verhältnismäßig einfachen Mitteln aufgenommen werden kann. Für die erhöhte Auflösung können Detektorelemente genutzt werden, die kleiner als eine Airy-Disk sind, das heißt kleiner als ein Bereich auf der Detektionseinrichtung, auf welchen ein Probenpunkt abgebildet wird. Hierdurch empfangen mehrere, benachbarte Detektorelemente Licht von demselben Probenpunkt. Damit solche benachbarten Detektorelemente dennoch nah nebeneinander liegende Probenpunkte unterscheiden können, werden erfindungsgemäß gleichzeitig eine Beleuchtungs- und eine Detektionsabtastbewegung durchgeführt. Dabei sind deren Richtungen zueinander entgegengesetzt.

### Bezugszeichenliste

- 10: Lichtquelle
- 12: Spiegeltreppe mit teildurchlässigen Spiegeln / Farbteilern
- 14: Akusto-optischer durchstimmbarer Filter (AOTF)
- 15: Beleuchtungslicht
- 16, 18, 19: Spiegel
- 17: Kollimationsoptik
- 20: Scan-Einrichtung, Ablenk-Einrichtung, Scanner
- 21, 22: Optiken
- 23: Farbteiler, Strahlteiler
- 30: Objektiv
- 40: Probenebene
- 41: Probe
- 42: fluoreszierendes Sub-Airy-Farbstoffkügelchen (Bead)
- X: markierte ausgewählte Probenpunkte
- 44: Beleuchtungsspot
- 44A - 44D: Positionen des jeweiligen Mittelpunkts von Beleuchtungsspots in der Probenebene
- 45: Probe-Verschiebeeinheit, Probenhalterung
- 47: Detektionssignal bei herkömmlicher Weitfeldbeleuchtung
- 48: Detektionssignal bei einem erfindungsgemäßen Lichtmikroskop
- 50: Scan-Einrichtung, Ablenk-Einrichtung, Scanner
- 51, 55, 57: Spiegel
- 52: Fokussieroptik
- 53: Probenlicht
- 54, 58: Optiken
- 56: Pinhole, konfokale Blende, Raumfilter
- 59.1, 59.2: Spiegel
- 60: Detektionseinrichtung, umfassend mehrere Sub-Airy-Detektorelemente (z.B. 2D-Chip-Kamera)
- 61, 61A - 61D: Detektorelemente, Detektor-Pixel
- 62: Detektionsebene
- 70: Beleuchtungsabtastbewegung
- 71: Detektionsabtastbewegung
- 100: Lichtmikroskop

## Patentansprüche

1. Lichtmikroskop
mit einer Probenebene (40), in welcher eine zu untersuchende Probe (41) positionierbar ist,
mit einer Lichtquelle (10) zum Aussenden von Beleuchtungslicht (15),
mit optischen Abbildungsmitteln (16 - 23, 30) zum Leiten des Beleuchtungslichts (15) in die Probenebene (40), wobei eine strukturierte Beleuchtung erzeugt wird,
mit einer ersten Scan-Einrichtung (20), mit welcher ein Strahlengang des Beleuchtungslichts (15) und die Probe (41) relativ zueinander bewegbar sind zum Erzeugen einer Beleuchtungsabtastbewegung (70) des Beleuchtungslichts (15) relativ zur Probe (41),
mit einer Detektoreinrichtung (60), welche mehrere Detektorelemente (61) umfasst, zum Nachweisen von Probenlicht (53), welches von der Probe (41) kommt,
mit Elektronikmitteln zum Bestimmen eines Bilds der Probe (41) auf Grundlage des von der Detektoreinrichtung (60) nachgewiesenen Probenlichts (53),
wobei eine zweite Scan-Einrichtung (20, 50) vorhanden ist, mit welcher verstellbar ist, welcher Probenbereich auf ein bestimmtes der Detektorelemente (61) abbildbar ist, zum Erzeugen einer Detektionsabtastbewegung (71) eines Empfangsbereichs dieses Detektorelements (61) in der Probenebene (40) relativ zur Probe (41),
**dadurch gekennzeichnet,**
**dass** die Elektronikmittel dazu eingerichtet sind, die erste und die zweite Scan-Einrichtung (20, 50) abhängig voneinander und so zu steuern, dass eine momentane Richtung der Detektionsabtastbewegung (71) entgegengesetzt zu einer momentanen Richtung der Beleuchtungsabtastbewegung (70) ist, wobei durch die entgegengesetzte Richtung der Detektionsabtastbewegung (71) eine Position einer Gesamt-Punktspreizfunktion, mit der ein bestimmtes Detektorelement (61) Licht empfängt, bezüglich der Probe (41) ruht, womit ein bestimmtes der Detektorelemente (61) Licht hauptsächlich aus stets einem selben Probenbereich empfängt.

2. Lichtmikroskop nach Anspruch 1,
**dadurch gekennzeichnet,**
**dass** mit der ersten Scan-Einrichtung (20) zum Erzeugen der Beleuchtungsabtastbewegung (70) eine Strahlablenkung des Beleuchtungslichts (15) einstellbar ist.

3. Lichtmikroskop nach Anspruch 1 oder 2,
**dadurch gekennzeichnet,**
**dass** mit der ersten Scan-Einrichtung (20) zum Erzeugen der Beleuchtungsabtastbewegung (70) eine Probenhalterung (45) relativ zu einem Strahlengang des Beleuchtungslichts (15) bewegbar ist.

4. Lichtmikroskop nach einem der Ansprüche 1 bis 3,
**dadurch gekennzeichnet,**
**dass** mit der zweiten Scan-Einrichtung (20, 50) eine Strahlablenkung des Probenlichts (53) einstellbar ist zum Verschieben einer Abbildung eines Probenbereichs über die Detektoreinrichtung (60).

5. Lichtmikroskop nach einem der Ansprüche 1 bis 4,
**dadurch gekennzeichnet,**
**dass** die erste und die zweite Scan-Einrichtung mit einer gemeinsamen Scan-Einrichtung (20) gebildet sind,
**dass** die gemeinsame Scan-Einrichtung (20) einen Scanspiegel aufweist, wobei Beleuchtungslicht (15) auf eine Vorderseite des Scanspiegels leitbar ist, und
**dass** zum Erzeugen von entgegengesetzten Richtungen zwischen der Beleuchtungsabtastbewegung (70) und der Detektionsabtastbewegung (71) Strahlführungsmittel (54, 55, 56, 57, 58) vorhanden sind, mit welchen das Probenlicht (53) auf eine Rückseite des Scanspiegels führbar ist.

6. Lichtmikroskop nach Anspruch 5,
**dadurch gekennzeichnet,**
**dass** mit den Strahlführungsmitteln (21, 22, 30, 54, 55, 56, 57, 58) Probenlicht (53) zunächst auf die Vorderseite des Scanspiegels und von dort auf die Rückseite des Scanspiegels leitbar ist, und
**dass** von der Rückseite des Scanspiegels reflektiertes Probenlicht (53) nochmals auf die Rückseite des Scanspiegels leitbar ist zum Erzeugen von entgegengesetzten Richtungen zwischen der Beleuchtungsabtastbewegung (70) und der Detektionsabtastbewegung (71).

7. Lichtmikroskop nach einem der Ansprüche 1, 2 und 4,
**dadurch gekennzeichnet,**
**dass** die zweite Scan-Einrichtung zum Bewegen einer Probenhalterung (45) eingerichtet ist, um eine Abbildung eines bestimmten Probenbereichs über die Detektoreinrichtung (60) zu verschieben.

8. Lichtmikroskop nach einem der Ansprüche 1 bis 7,
**dadurch gekennzeichnet,**
**dass** die zweite Scan-Einrichtung zum Bewegen der Detektoreinrichtung (60) eingerichtet ist, um eine Abbildung eines bestimmten Probenbereichs über die Detektoreinrichtung (60) zu verschieben.

9. Lichtmikroskop nach einem der Ansprüche 1 bis 8,
**dadurch gekennzeichnet,**
**dass** benachbarte Detektorelemente (61A - 61D) der Detektoreinrichtung (60) zueinander einen Abstand aufweisen, der kleiner ist als eine Airy-Disk, den ein Punkt in der Probenebene (40) auf der Detektoreinrichtung (60) erzeugt.

10. Lichtmikroskop nach einem der Ansprüche 1 bis 9,
**dadurch gekennzeichnet,**
**dass** mit den Optikmitteln (30, 23, 51, 52) auf einer Detektionsfläche der Detektoreinrichtung (60) ein Bild einer Probe (41) erzeugbar ist, wobei die Abmessungen des Bildes durch den Abbildungsmaßstab der Optikmittel (30, 23, 51, 52) gegeben sind, und
**dass** eine Länge und eine Breite der Detektionsfläche mindestens doppelt so groß sind wie die Abmessungen des Bildes.

11. Lichtmikroskop nach einem der Ansprüche 1 bis 10,
**dadurch gekennzeichnet,**
**dass** das Mikroskop ein Weitfeldmikroskop ist.

12. Lichtmikroskop nach einem der Ansprüche 1 bis 10,
**dadurch gekennzeichnet,**
**dass** in einem Detektionsstrahlengang eine Blende (56) zur quasi-konfokalen Filterung vorhanden ist.

13. Mikroskopieverfahren zum Untersuchen einer Probe (41), die in einer Probenebene (40) eines Mikroskops positioniert wird,
bei dem Beleuchtungslicht (15) als strukturierte Beleuchtung in die Probenebene (40) geleitet wird,
bei dem ein Strahlengang des Beleuchtungslichts (15) und die Probe (41) relativ zueinander bewegt werden zum Erzeugen einer Beleuchtungsabtastbewegung (70) des Beleuchtungslichts (15) relativ zur Probe (41),
bei dem von der Probe (41) kommendes Probenlicht (53) mit einer Detektoreinrichtung (60) nachgewiesen wird und
bei dem mit Elektronikmitteln ein Bild der Probe (41) auf Grundlage des nachgewiesenen Probenlichts (53) bestimmt wird,
wobei eine Detektionsabtastbewegung (71) eines Empfangsbereichs eines Detektorelements (61) einer Detektoreinrichtung (60) in der Probenebene (40) relativ zur Probe (41) erzeugt wird, indem verstellt wird, welcher Probenbereich auf ein bestimmtes Detektorelement (61) der Detektoreinrichtung (60) abgebildet wird,
**dadurch gekennzeichnet,**
**dass** die Beleuchtungsabtastbewegung (70) und die Detektionsabtastbewegung (71) abhängig voneinander und so gesteuert werden, dass eine momentane Richtung der Detektionsabtastbewegung (71) und eine momentane Richtung der Beleuchtungsabtastbewegung (70) entgegengesetzt zueinander sind, wobei durch die entgegengesetzte Richtung der Detektionsabtastbewegung (71) eine Position einer Gesamt-Punktspreizfunktion, mit der ein bestimmtes Detektorelement (61) Licht empfängt, bezüglich der Probe (41) ruht, womit ein bestimmtes der Detektorelemente (61) Licht hauptsächlich aus stets einem selben Probenbereich empfängt.

14. Mikroskopieverfahren nach Anspruch 13,
**dadurch gekennzeichnet,**
**dass** Beleuchtungsabtastbewegungen (70) und Detektionsabtastbewegungen (71) während einer Integrationszeit von Detektorelementen der Detektoreinrichtung (60) durchgeführt werden.

15. Mikroskopieverfahren nach Anspruch 13 oder 14,
**dadurch gekennzeichnet,**
**dass** für die Aufnahme eines Probenbilds die Detektorelemente (61) empfangene Probenlichtsignale durchgängig integrieren.

## Claims

1. Light microscope, comprising
a specimen plane (40), in which a specimen (41) to be examined can be positioned,
a light source (10) to emit illuminating light (15),
optical imaging means (16 - 23, 30) to convey the illuminating light (15) into the specimen plane (40), whereby a structured illumination is produced,
a first scanning means (20), with which an optical path of the illuminating light (15) and the specimen (41) can be moved relative to each other to produce an illumination scanning movement (70) of the illuminating light (15) relative to the specimen (41),
a detector means (60) comprising several detector elements (61) to detect specimen light (53) coming from the specimen (41),
electronic means to determine an image of the specimen (41) on the basis of the specimen light (53) detected by the detector means (60),
wherein a second scanning means (20, 50) is provided, with which it can be adjusted which specimen region can be imaged on a specific detector element (61) of the detector elements (61), to produce a detection scanning movement (71) of a receiving region of this detector element (61) in the specimen plane (40) relative to the specimen (41),
**characterised in that**
the electronic means is adapted to control the first and the second scanning means (20, 50) in dependence upon each other and in such a way that a momentary direction of the detection scanning movement (71) is opposite to a momentary direction of the illumination scanning movement (70),
wherein due to the opposite direction of the detection scanning movement (71), a position of a total point spread function, with which a specific detector element (61) receives light, is at rest relative to the specimen (41),
whereby a specific detector element (61) of the detector elements (61) always receives light mainly from the same specimen region.

2. Light microscope according to claim 1,
**characterised in that**
a beam deflection of the illuminating light (15) can be adjusted with the first scanning means (20) to produce the illumination scanning movement (70).

3. Light microscope according to claim 1 or 2,
**characterised in that**
a specimen holder (45) can be moved relative to an optical path of the illuminating light (15) with the first scanning means (20) to produce the illumination scanning movement (70).

4. Light microscope according to one of the claims 1 to 3,
**characterised in that**
a beam deflection of the specimen light (53) can be adjusted with the second scanning means (20, 50) to move an image of a specimen region over the detector means (60).

5. Light microscope according to one of the claims 1 to 4,
**characterised in that**
the first and the second scanning means are formed with a joint scanning means (20),
the joint scanning means (20) has a scanning mirror, wherein illuminating light (15) can be conveyed to a front side of the scanning mirror,
and
for producing opposite directions between the illumination scanning movement (70) and the detection scanning movement (71), a beam guiding means (54, 55, 56, 57, 58) is provided which can guide the specimen light (53) to a rear side of the scanning mirror.

6. Light microscope according to claim 5,
**characterised in that**
with the beam guiding means (21, 22, 30, 54, 55, 56, 57 58), specimen light (53) can be conveyed initially to the front side of the scanning mirror and from there to the rear side of the scanning mirror, and
specimen light (53) reflected by the rear side of the scanning mirror can once again be conveyed to the rear side of the scanning mirror to produce counter directions between the illumination scanning movement (70) and the detection scanning movement (71).

7. Light microscope according to one of the claims 1, 2 and 4,
**characterised in that**
the second scanning means is adapted to move a specimen holder (45) in order to move an image of a certain specimen region over the detector means (60).

8. Light microscope according to one of the claims 1 to 7,
**characterised in that**
the second scanning means is adapted to move the detector means (60) in order to move an image of a certain specimen region over the detector means (60).

9. Light microscope according to one of the claims 1 to 8,
**characterised in that**
adjacent detector elements (61A - 61D) of the detector means (60) are at a distance from each other which is smaller than an airy disk produced by a point in the specimen plane (40) on the detector means (60).

10. Light microscope according to one of the claims 1 to 9,
**characterised in that**
an image of a specimen (41) can be produced with the optical means (30, 23, 51, 52) on a detection surface of the detector means (60), wherein the dimensions of the image are given through the magnification of the optical means (30, 23, 51, 52), and
a length and a width of the detection surface are at least double the size of the dimensions of the image.

11. Light microscope according to one of the claims 1 to 10,
**characterised in that**
the microscope is a wide field microscope.

12. Light microscope according to one of the claims 1 to 10,
**characterised in that**
a diaphragm (56) for quasi-confocal filtering is present in an optical detection path.

13. Microscopy method for examining a specimen (41) which is positioned in a specimen plane (40) of a microscope,
wherein illuminating light (15) is conveyed as structured illumination into the specimen plane (40),
wherein an optical path of the illuminating light (15) and the specimen (41) are moved relative to each other to produce an illumination scanning movement (70) of the illuminating light (15) relative to the specimen (41),
wherein specimen light (53) coming from the specimen (41) is detected with a detector means (60) and
an image of the specimen (41) is determined with electronic means on the basis of the detected specimen light (53),
wherein a detection scanning movement (71) of a receiving region of a detector element (61) of a detector means (60) is produced in the specimen plane (40) relative to the specimen (41) by adjusting which specimen region is imaged on a specific detector element (61), and
**characterised in that**
the illumination scanning movement (70) and the detection scanning movement (71) are controlled in dependence upon each other and in such a way that a momentary direction of the detection scanning movement (71) and a momentary direction of the illumination scanning movement (70) are opposite to each other,
wherein due to the opposite direction of the detection scanning movement (71), a position of a total point spread function, with which a specific detector element (61) receives light, is at rest relative to the specimen (41),
whereby a specific detector element (61) of the detector elements (61) always receives light mainly from the same specimen region.

14. Microscopy method according to claim 13,
**characterised in that**
illumination scanning movements (70) and detection scanning movements (71) are carried out during an integration time of detector elements of the detector means (60).

15. Microscopy method according to claim 13 or 14,
**characterised in that**
the detector elements (61) integrate received specimen light signals without pause to record a specimen image.

## Revendications

1. Microscope optique comprenant
un plan d'échantillon (40) dans lequel l'échantillon à examiner (41) peut être positionné,
une source de lumière (10) pour l'envoi de lumière d'éclairage (15),
des moyens d'imagerie optiques (16 - 23, 30) pour guider la lumière d'éclairage (15) dans le plan d'échantillon (40), tandis qu'un éclairage structuré est produit,
un premier dispositif de balayage (20), avec lequel un chemin optique de la lumière d'éclairage (15) et l'échantillon (41) peuvent être déplacés l'un par rapport à l'autre pour produire un mouvement de balayage d'éclairage (70) de la lumière d'éclairage (15) par rapport à l'échantillon (41),
un dispositif de détection (60) comprenant plusieurs éléments de détection (61) pour la détection de lumière d'échantillon (53) provenant de l'échantillon (41),
des moyens électroniques pour déterminer une image de l'échantillon (41) sur la base de la lumière d'échantillon (53) détectée par le dispositif de détection (60),
tandis qu'un deuxième dispositif de balayage (20, 50) est fourni, avec lequel il est possible de régler quelle zone d'échantillon peut être reproduite sur un élément de détection (61) déterminé des éléments de détection (61), pour produire un mouvement de balayage de détection (71) d'une zone de réception de cet élément de détection (61) dans le plan d'échantillon (40) par rapport à l'échantillon (41),
**caractérisé en ce que**
les moyens électroniques sont adaptés afin de contrôler le premier et le deuxième dispositif de balayage (20, 50) indépendamment l'un de l'autre et de telle sorte qu'une direction momentanée du mouvement de balayage de détection (71) soit opposée à une direction momentanée du mouvement de balayage d'éclairage (70),
tandis qu'en raison de la direction opposée du mouvement de balayage de détection (71) une position de l'ensemble de la fonction d'étalement du point, par laquelle un élément de détection (61) déterminé des éléments de détection (61) reçoit de la lumière, repose par rapport à l'échantillon (41),
tandis qu'un élément de détection (61) déterminé des éléments de détection (61) reçoit toujours de la lumière essentiellement d'une zone d'échantillon qui est toujours la même.

2. Microscope optique selon la revendication 1
**caractérisé en ce que**
une déviation de rayons de la lumière d'éclairage (15) peut être réglée avec le premier dispositif de balayage (20) pour produire le mouvement de balayage d'éclairage (70).

3. Microscope optique selon la revendication 1 ou 2
**caractérisé en ce que**
un porte-échantillons (45) peut être déplacé par rapport à un chemin optique de la lumière d'éclairage (15) avec le premier dispositif de balayage (20) pour produire le mouvement de balayage d'éclairage (70).

4. Microscope optique selon une des revendications 1 à 3
**caractérisé en ce que**
une déviation des rayons de la lumière d'échantillon (53) peut être réglée avec le deuxième dispositif de balayage (20, 50) pour déplacer une image d'une zone d'échantillon sur le dispositif de détection (60).

5. Microscope optique selon une des revendications 1 à 4
**caractérisé en ce que**
le premier et le deuxième dispositif de balayage sont constitués avec un dispositif de balayage commun (20),
le dispositif de balayage commun (20) présente un miroir de balayage, tandis que de la lumière d'éclairage (15) peut être guidée vers une partie avant du miroir de balayage, et
pour la production de directions opposées entre le mouvement de balayage d'éclairage (70) et le mouvement de balayage de détection (71), sont fournis des moyens de guider des rayons (54, 55, 56, 57, 58), avec lesquels la lumière d'échantillon (53) peut être guidée vers une partie arrière du miroir de balayage.

6. Microscope optique selon la revendication 5
**caractérisé en ce que**
avec les moyens de guidage des rayons (21, 22, 30, 54, 55, 56, 57, 58), de la lumière d'échantillon (53) peut tout d'abord être guidée vers la partie avant du miroir de balayage et, à partir de là, vers la partie arrière du miroir de balayage, et
de la lumière d'échantillon (53) réfléchie par la partie arrière du miroir de balayage peut être de nouveau guidée vers la partie arrière du miroir de balayage pour produire des directions opposées entre le mouvement de balayage d'éclairage (70) et le mouvement de balayage de détection (71).

7. Microscope optique selon une des revendications 1, 2 et 4
**caractérisé en ce que**
le deuxième dispositif de balayage est adapté pour déplacer un porte-échantillons (45) afin de déplacer une image d'une zone d'échantillon déterminée sur le dispositif de détection (60).

8. Microscope optique selon une des revendications 1 à 7
**caractérisé en ce que**
le deuxième dispositif de balayage est adapté pour déplacer le dispositif de détection (60) afin de déplacer une image d'une zone d'échantillon déterminée sur le dispositif de détection (60).

9. Microscope optique selon une des revendications 1 à 8
**caractérisé en ce que**
des éléments de détection (61A - 61D) adjacents au dispositif de détection (60) sont, les uns par rapport aux autres, à une distance qui est plus petite qu'un disque d'Airy produit par un point dans le plan d'échantillon (40) sur le dispositif de détection (60).

10. Microscope optique selon une des revendications 1 à 9
**caractérisé en ce que**
une image d'un échantillon (41) peut être produite avec les moyens optiques (30, 23, 51, 52) sur une surface de détection du dispositif de détection (60), tandis que les dimensions de l'image sont données par le biais du grossissement des moyens optiques (30, 23, 51, 52), et
une longueur et une largeur de la surface de détection font au moins deux fois la taille des dimensions de l'image.

11. Microscope optique selon une des revendications 1 à 10
**caractérisé en ce que**
le microscope est un microscope à grand champ.

12. Microscope optique selon une des revendications 1 à 10
**caractérisé en ce que**,
un diaphragme (56) pour un filtrage quasiment confocal est présent dans un chemin optique de détection, .

13. Procédure de microscopie pour l'examen d'un échantillon (41) qui est positionné dans un plan d'échantillon (40) d'un microscope,
dans le cadre de laquelle de la lumière d'éclairage (15) est guidée, en tant qu'éclairage structuré, dans le plan d'échantillon (40),
dans le cadre de laquelle un chemin optique de la lumière d'éclairage (15) et l'échantillon (41) sont déplacés l'un par rapport à l'autre pour produire un mouvement de balayage d'éclairage (70) de la lumière d'éclairage (15) par rapport à l'échantillon (41),
dans le cadre de laquelle la lumière d'échantillon (53) provenant de l'échantillon (41) est détectée avec un dispositif de détection (60) et
dans le cadre de laquelle une image de l'échantillon (41) est déterminée, avec des moyens électroniques, sur la base de la lumière d'échantillon (53) détectée,
tandis qu'un mouvement de balayage de détection (71) d'une zone de réception d'un élément de détection (61) d'un dispositif de détection (60) est produit dans le plan d'échantillon (40), par rapport à l'échantillon (41), en réglant quelle zone d'échantillon est reproduite sur un élément de détection (61) déterminé du dispositif de détection (60),
**caractérisée en ce que**
le mouvement de balayage d'éclairage (70) et le mouvement de balayage de détection (71) sont contrôlés en dépendance l'un de l'autre et de telle sorte qu'une direction momentanée du mouvement de balayage de détection (71) et une direction momentanée du mouvement de balayage d'éclairage (70) sont opposées l'une à l'autre
tandis qu'en raison de la direction opposée du mouvement de balayage de détection (71) une position de l'ensemble de la fonction d'étalement du point, par laquelle un élément de détection (61) déterminé des éléments de détection (61) reçoit de la lumière, repose par rapport à l'échantillon (41),
ce qui permet qu'un élément de détection (61) déterminé des éléments de détection (61) reçoive de la lumière essentiellement d'une zone d'échantillon qui est toujours la même.

14. Procédure de microscopie selon la revendication 13
**caractérisée en ce que**
les mouvements de balayage d'éclairage (70) et les mouvements de balayage de détection (71) sont exécutés pendant un temps d'intégration d'éléments de détection du dispositif de détection (60).

15. Procédure de microscopie selon la revendication 13 ou 14
**caractérisée en ce que**,
les éléments de détection (61) intègrent continuellement les signaux lumineux d'échantillon reçus pour enregistrer une image d'échantillon,.
